(19) Europäisches Patentamt / European Patent Office / Office européen des brevets

(11) **EP 4 099 162 B1**

(12) **EUROPEAN PATENT SPECIFICATION**

(45) Date of publication and mention
of the grant of the patent:
**30.07.2025 Bulletin 2025/31**

(21) Application number: **21760358.8**

(22) Date of filing: **24.02.2021**

(51) International Patent Classification (IPC):
***G06F 9/451*** *(2018.01)*

(52) Cooperative Patent Classification (CPC):
**G06F 9/451**

(86) International application number:
**PCT/CN2021/077640**

(87) International publication number:
**WO 2021/169991 (02.09.2021 Gazette 2021/35)**

(54) **METHOD AND APPARATUS FOR CONFIGURING THEME COLOR OF TERMINAL DEVICE, AND TERMINAL DEVICE**

VERFAHREN UND VORRICHTUNG ZUR KONFIGURATION DER THEMENFARBE EINER ENDVORRICHTUNG UND ENDVORRICHTUNG

PROCÉDÉ ET APPAREIL DE CONFIGURATION DE COULEUR DE THÈME DE DISPOSITIF TERMINAL, ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2020 CN 202010125350**

(43) Date of publication of application:
**07.12.2022 Bulletin 2022/49**

(73) Proprietor: **Huawei Technologies Co., Ltd.**
**Shenzhen, Guangdong 518129 (CN)**

(72) Inventors:
- **GAO, Jiasi**
  **Beijing 100084 (CN)**
- **XU, Qianyao**
  **Beijing 100084 (CN)**
- **SUN, Hao**
  **Beijing 100084 (CN)**
- **LIANG, Wan**
  **Beijing 100084 (CN)**
- **XU, Yingqing**
  **Beijing 100084 (CN)**
- **ZHANG, Yundie**
  **Shenzhen, Guangdong 518129 (CN)**
- **LIU, Mengdi**
  **Shenzhen, Guangdong 518129 (CN)**
- **LIU, Aibing**
  **Shenzhen, Guangdong 518129 (CN)**

(74) Representative: **Maiwald GmbH**
**Elisenhof**
**Elisenstraße 3**
**80335 München (DE)**

(56) References cited:
| | |
|---|---|
| CN-A- 1 487 413 | CN-A- 101 776 991 |
| CN-A- 106 033 334 | CN-A- 106 855 797 |
| CN-A- 107 704 253 | CN-A- 111 562 955 |
| JP-A- 2005 277 460 | JP-A- 2009 175 857 |
| US-A1- 2002 180 784 | US-B1- 6 292 228 |

## Description

This application claims priority to Chinese Patent Application No. 202010125350.6, filed with the China National Intellectual Property Administration on February 27, 2020 and entitled "METHOD FOR CONFIGURING THEME COLOR OF TERMINAL DEVICE, APPARATUS, AND TERMINAL DEVICE".

## TECHNICAL FIELD

This application relates to a method for configuring a theme color of a terminal device and a terminal device.

## BACKGROUND

Usually, a terminal device such as a mobile phone or a tablet computer implements various functions based on an operating system. Different systems are designed with corresponding system theme colors. The system theme colors may be represented by using various controls of the terminal device, for example, a virtual button, a text, and a bubble box.

In the conventional technology, a theme color designed based on an operating system in the terminal device is usually fixed, that is, a color of each control of the terminal device is usually fixed. To present diversified system theme colors, some systems or applications provide a theme pack skin change function, to allow users to change the system theme color in a unified manner. However, the current theme pack skin change is merely replacing a currently used theme color with a set of preconfigured theme colors, and colors of various controls cannot be separately adjusted according to an actual situation of the terminal device. For example, when a user uses a picture taken by a camera or a picture downloaded from the Internet as a screen wallpaper, the terminal device cannot automatically adjust a color of each control based on a color of the picture. Consequently, the color of each control and a theme color of the entire system do not match a style of the picture.

JP 2005 277460 A describes a color temperature conversion apparatus and method for performing color temperature conversion according to the luminance level of a pixel in image data.

US 6 292 228 B1 describes a device and method for automatically adjusting an image condition in a display. The device includes a photo sensor to detect the environmental illumination and a microprocessor utilizing the detected data to appropriately adjust the image condition with respect to a user preference.

## SUMMARY

Embodiments of this application provide a method for configuring a theme color of a terminal device, an apparatus, and a terminal device, to adjust a color of a control of a terminal device based on a color of a picture, so that a color of each control and a theme color of an entire system match a style of the picture.

According to a first aspect, an embodiment of this application provides a method for configuring a theme color of a terminal device, and the method includes the following.

When it is detected that a terminal device switches a screen picture, after a tone type of a to-be-switched-to picture is obtained, cool and warm color system information of the picture is determined, and arrangement and proportion information of a representative color system of the picture is identified, a theme color of the terminal device may be configured based on the tone type, the cool and warm color system information, and the arrangement and proportion information of the representative color system, so that a configured theme of the system can keep consistent with a style of the picture or the environment, without affecting use of basic interaction functions of controls of various colors in the system.

Statistics are collected on a luminance component and a purity component, in predetermined color space, of a pixel included in the picture, and then the tone type of the picture is determined based on the luminance component and the purity component. Target color space may be Lch color space.

With reference to the above, in a second possible implementation of this embodiment of this application, statistics collection on the luminance component and the purity component, in the predetermined color space, of the pixel included in the picture may be implemented by reading a pixel value of each pixel in the picture and splitting the pixel value of each pixel into a luminance component value and a purity component value in the predetermined color space. The luminance component of the picture may be obtained by collecting statistics on a quantity of pixels corresponding to each luminance component value, and the purity component of the picture may be obtained by collecting statistics on a quantity of pixels corresponding to each purity component value.

With reference to the first possible implementation of the first aspect, in a third possible implementation of this embodiment of this application, when the tone type of the picture is determined based on the luminance component and the purity component, a luminance similarity between the luminance component and a luminance component of a center of each of a plurality of preset tone groups and a purity similarity between the purity component and a purity component of the center of each of the plurality of tone groups may be first calculated. The plurality of tone groups are obtained by clustering luminance components and purity components of a plurality of sample wallpapers. On this basis, the tone type of the picture is determined based on the luminance similarity and the purity similarity. That is, the luminance component and the purity component of the to-be-switched-to picture are compared with the luminance component and the purity component of the center of each tone group, and a tone group closest to a center is identified as a tone group to which the to-be-switched-to picture belongs. In this embodiment of this application, the tone type of the picture may include a saturated type, a light type, or a dark type.

With reference to the first, the second, and the third possible implementations of the first aspect, in a fourth possible implementation of this embodiment of this application, the cool and warm color system information of the picture may be obtained through calculation based on a hue component and the purity component after statistics on the hue component of the picture in the predetermined color space are collected. That is, a warm/cool value of the picture is calculated based on the hue component and the purity component, and then cool and warm color system information corresponding to a range to which the value belongs is identified as the cool and warm color system information of the to-be-switched-to picture based on the warm/cool value. The cool and warm color system information may include a cool color system, a neutral color system, or a warm color system.

With reference to the fourth possible implementation of the first aspect, in a fifth possible implementation of this embodiment of this application, when color extraction is performed on the picture, a color of each pixel in the picture may be first identified, pixels of a same color are merged, and then pixels of all colors are clustered based on the hue component, to obtain a plurality of color clusters included in the picture. On this basis, an area and a purity component value of a pixel included in each color in each color cluster are separately calculated, and the arrangement and proportion information of the representative color system of the picture may be determined based on the area and the purity component value of the pixel included in each color. In this embodiment of this application, five colors may usually be selected as representative color systems.

With reference to the fifth possible implementation of the first aspect, in a sixth possible implementation of this embodiment of this application, when the representative color system of the picture is determined based on the area and the purity component value of the pixel included in each color, weighted summation may be performed on the area and the purity component value of the pixel included in each color in each color cluster based on weights of the area and the purity component value, to obtain a weighted summation value of each color in each color cluster. A color with a largest weighted summation value in each color cluster is used as the arrangement and proportion information of the representative color system of the picture.

With reference to the first aspect, or the first, the second, the third, the fifth, or the sixth possible implementation of the first aspect, in a seventh possible implementation of this embodiment of this application, after the tone type of the picture is obtained, the cool and warm color system information of the picture is calculated, the color is extracted, and the representative color system of the wallpaper is obtained, a theme color template that includes color information of a plurality of configurable controls may be determined, and then colors of the corresponding controls are configured based on the color information of the controls in the theme color template. In this way, a configured theme of the system can keep consistent with the style of the picture or the environment, without affecting use of basic interaction functions of controls of various colors in the system.

With reference to the seventh possible implementation of the first aspect, in an eighth possible implementation of this embodiment of this application, when a color of a primary color control in the theme color template corresponding to the picture is determined, if the representative color system includes a gray color system, and an area of pixels included in the gray color system is greater than a first proportion of a second color system, a color corresponding to the gray color system may be configured as the color of the primary color control, where the second color system may be a color system with a second largest area of pixels in all representative color systems.

If the representative color system does not include a gray color system, or an area of pixels included in the gray color system is not the largest, or an area of pixels included in the gray color system is not greater than the first proportion of the second color system, a color corresponding to a color system with a largest area of pixels in color systems other than the gray color system may be configured as the color of the primary color control.

With reference to the eighth possible implementation of the first aspect, in a ninth possible implementation of this embodiment of this application, when a color of a highlight primary color control in the theme color template corresponding to the picture is determined, the color of the primary color control may be adjusted based on the tone type of the picture, to obtain the color of the highlight primary color control. Colors of the highlight primary color control that correspond to different tone types separately meet preset luminance and purity requirements of the tone types.

With reference to the ninth possible implementation of the first aspect, in a tenth possible implementation of this embodiment of this application, when a color of a secondary color control in the theme color template corresponding to the picture is determined, if the tone type of the picture is the light type or the dark type, statistics on whether an area of pixels included in another color system other than the color of the highlight primary color control is greater than a second proportion may be collected. If the area of the pixels included in the another color system is greater than the second proportion, a color corresponding to a color system with a largest area in the another color system may be configured as the color of the secondary color control. If no area of pixels included in another color system is greater than the second proportion, the color of the highlight primary color control may be configured as the color of the secondary color control.

If the tone type of the picture is the saturated type, the color of the secondary color control may be configured based on a quantity of representative color systems of the picture.

With reference to the eighth possible implementation of the first aspect, in an eleventh possible implementation of this embodiment of this application, when a color of a title color control in the theme color template corresponding to the picture is determined, the color of the primary color control may be configured as the color of the title color control, and the color of the title color control is adjusted to meet preset luminance and purity requirements for the title color.

With reference to the eighth possible implementation of the first aspect, in a twelfth possible implementation of this embodiment of this application, when a color of a theme gray control in the theme color template corresponding to the picture is determined, the color of the primary color control may be used to match a plurality of gray levels with different luminance and purity, to obtain the color of the theme gray control.

With reference to the eighth possible implementation of the first aspect, in a thirteenth possible implementation of this embodiment of this application, when a color of a theme-tint color control, a color of a theme-tint color light control, a color of a function color control, or a color of a bubble color control in the theme color template corresponding to the picture is determined, the color of the theme-tint color control, the color of the theme-tint color light control, the color of the function color control, or the color of the bubble color control that matches the color system information may be determined based on the cool and warm color system information of the picture.

With reference to the seventh possible implementation of the first aspect, in a fourteenth possible implementation of this embodiment of this application, when the terminal device configures a color for a corresponding control based on color information of the control in the theme color template, the terminal device may first determine color types of the plurality of configurable controls in the terminal device, and then separately perform color configuration on the plurality of configurable controls by using colors corresponding to the color types in the theme color template. In this way, the configured colors of the plurality of controls are consistent with the style of the picture or the environment.

With reference to the fourteenth possible implementation of the first aspect, in a fifteenth possible implementation of this embodiment of this application, the terminal device may determine the color types of the plurality of configurable controls by obtaining a control ID of a target control in the terminal device. The control ID may be used to indicate that a color type of the target control belongs to a primary color control, a highlight primary color control, a secondary color control, a title color control, a theme gray control, and/or a theme-tint color control. The target control is any one of the plurality of configurable controls. In this way, the terminal device may identify a color type of each control in an index manner based on the written control ID.

With reference to the fourteenth possible implementation of the first aspect, in a sixteenth possible implementation of this embodiment of this application, when determining the color types of the plurality of configurable controls, the terminal device may further identify an element included in the configurable controls in the terminal device. The element includes a text, a graphic, and/or an image. The element has at least one type of attribute information, and the attribute information includes at least an area or an initial color of the element. In this way, the terminal device may determine a color type of a target control based on attribute information of an element included in the target control. The target control is any one of the plurality of configurable controls. In this way, for each control whose control ID is not written in a design phase or whose control ID is not written according to a corresponding specification, the terminal device may also accurately identify the color type of the control, and perform color configuration based on the color type of the control.

According to a second aspect, an embodiment of this application provides an apparatus for configuring a theme color of a terminal device, and the apparatus may be applied to a terminal device. The apparatus may include:

a tone type obtaining module, configured to obtain a tone type of a to-be-switched-to picture when it is detected that the terminal device switches a picture;
a cool and warm color system information determining module, configured to determine cool and warm color system information of the picture;
a representative color system identification module, configured to identify arrangement and proportion information of a representative color system of the picture; and
a theme color configuration module, configured to configure a theme color of the terminal device based on the tone type, the cool and warm color system information, and the arrangement and proportion information of the representative color system.

According to a third aspect, an embodiment of this application provides a terminal device, including a memory, a processor, and a computer program that is stored in the memory and can be run on the processor. When executing the computer program, the processor implements the method for configuring a theme color of a terminal device according to any one of the implementations of the first aspect.

According to a fourth aspect, an embodiment of this application provides a computer-readable storage medium, where the computer-readable storage medium stores a computer program. When the computer program is executed by a processor of a terminal device, the method for configuring a theme color of a terminal device according to any one of the implementations of the first aspect is implemented.

According to a fifth aspect, an embodiment of this application provides a computer program product. When the computer program product runs on a terminal device, the terminal device is enabled to perform the method for configuring a theme color of a terminal device according to any one of the implementations of the first aspect.

Compared with the conventional technology, embodiments of this application have the following beneficial effects:

In embodiments of this application, when it is detected that a terminal device switches a screen picture, after a tone type of a to-be-switched-to picture is obtained, cool and warm color system information of the picture is determined, and arrangement and proportion information of a representative color system of the picture is identified, a theme color of the terminal device may be configured based on the tone type, the cool and warm color system information, and the arrangement and proportion information of the representative color system, so that a style of a theme of the system can keep consistent with a style of the picture or the environment, without affecting use of basic interaction functions of controls of various colors in the system.

**BRIEF DESCRIPTION OF DRAWINGS**

FIG. 1 is a schematic diagram of a relationship between a contrast ratio and reading/recognition efficiency in Web Content Accessibility Guidelines;

FIG. 2 is a schematic diagram of a hardware structure of a mobile phone to which a method for configuring a theme color of a terminal device is applicable according to an embodiment of this application;

FIG. 3 is a schematic diagram of a software structure of a mobile phone to which a method for configuring a theme color of a terminal device is applicable according to an embodiment of this application;

FIG. 4 is a schematic flowchart of steps of a method for configuring a theme color of a terminal device according to an embodiment of this application;

FIG. 5(a) is a schematic diagram of a picture with a cool color system according to an embodiment of this application;

FIG. 5(b) is a schematic diagram of a picture with a neutral color system according to an embodiment of this application;

FIG. 5(c) is a schematic diagram of a picture with a warm color system according to an embodiment of this application;

FIG. 6(a) is a schematic diagram of a color extraction scheme according to an embodiment of this application;

FIG. 6(b) is a schematic diagram of a color extraction scheme according to another embodiment of this application;

FIG. 6(c) is a schematic diagram of a color extraction scheme according to still another embodiment of this application;

FIG. 7 is a schematic diagram of color extraction results obtained by performing color extraction in different manners according to an embodiment of this application;

FIG. 8 is a schematic flowchart of steps of a method for configuring a theme color of a terminal device according to another embodiment of this application;

FIG. 9 is a schematic diagram of a process of determining a tone type of a picture according to an embodiment of this application;

FIG. 10 is a schematic diagram of a warm/cool value range according to an embodiment of this application;

FIG. 11 is a schematic diagram of a theme color template according to an embodiment of this application;

FIG. 12 is a schematic diagram of primary color configuration according to an embodiment of this application;

FIG. 13 is a schematic diagram of highlight primary color configuration according to an embodiment of this application;

FIG. 14 is a schematic diagram of secondary color configuration according to an embodiment of this application;

FIG. 15 is a schematic diagram of title color configuration according to an embodiment of this application;

FIG. 16 is a schematic diagram of theme gray configuration according to an embodiment of this application;

FIG. 17 is a schematic diagram of theme-tint color configuration according to an embodiment of this application;

FIG. 18 is a schematic diagram of theme-tint color light configuration according to an embodiment of this application;

FIG. 19 is a schematic diagram of function color configuration according to an embodiment of this application;

FIG. 20 is a schematic diagram of bubble color configuration according to an embodiment of this application;

FIG. 21 is a block diagram of a structure of an apparatus for configuring a theme color of a terminal device according to an embodiment of this application; and

FIG. 22 is a schematic diagram of a structure of a terminal device according to an embodiment of this application.

**DESCRIPTION OF EMBODIMENTS**

In the following description, for illustration instead of limitation, specific details such as a particular system structure and a technology are provided to facilitate a thorough understanding of embodiments of this application. However, a person skilled in the art should know that this application may be practiced in other embodiments without these specific details. In other cases, detailed descriptions of well-known systems, apparatuses, circuits, and methods are omitted, so that this application is described without being obscured by unnecessary details.

Terms used in the following embodiments are merely intended to describe specific embodiments, but are not intended to limit this application. The terms "one", "a", "the", "the foregoing", "this", and "the one" of singular forms used in the specification and the appended claims of this application are also intended to include expressions such as "one or more", unless otherwise specified in the context clearly. It should be further understood that, in embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

For ease of understanding, related knowledge such as a text contrast ratio and color space is first introduced.

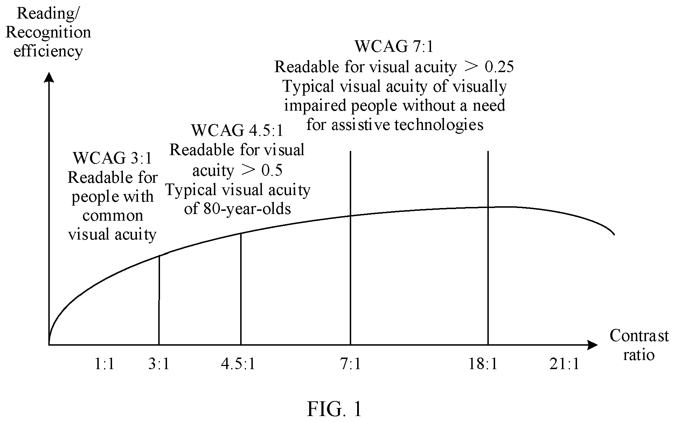

In a terminal device, the text contrast ratio is one of the most important factors that affect text readability (a hue and purity have weak impact on readability). Regardless of a website or a mobile phone, the text contrast ratio is in accordance with a related stipulation in the Web Content Accessibility Guidelines WCAG. FIG. 1 shows an example of a relationship between a contrast ratio and reading/recognition efficiency in the WCAG. The example includes three standard values, which respectively represent different readability standards. Usually, a common text should meet at least a contrast ratio requirement of 4.5:1. A large text needs to meet a contrast ratio of 3:1. For example, on a mobile phone, a large text may be equivalent to a bold text of 20 sp (Scaled Pixels, scaled pixels) or 16 sp. When the contrast ratio is too high, it is prone to cause visual fatigue and decrease reading performance. Therefore, when the text contrast ratio is designed, a high contrast ratio greater than 18:1 should be used with caution. In addition, as a user ages, contrast ratio thresholds of both light vision and dark vision increase.

In actual application, the contrast ratio may be calculated by using the following formula:

$$\text{Contrast ratio} = (L1 + 0.05)/(L2 + 0.05)$$

L1 is relative luminance of a lighter color, and L2 is relative luminance of a darker color. For sRGB color space, L = 0.2126 * R + 0.7152 * G + 0.0722 * B.

At present, in existing research, persons skilled in a related field have established a plurality of different color models. A Commission Internationale de L'Eclairage (Commission Internationale de L'Eclairage, CIE) chrominance model is one of the earliest used models. The chrominance model is a three-dimensional model in which the x and y dimensions define a color and the third dimension defines luminance. CIE specifies two types of color space in 1976. One type of color space is color space used for non-natural lighting, is referred to as CIE 1976 L*a*b or CIE LAB, and is color space established based on human eye perception. Coordinates used by a CIE LAB system are referred to as opponent color coordinates (opponent color coordinate). The CIE LAB uses coordinate axes b, a, and L to define CIE color space. A value of L represents luminance, which ranges from 0 (black) to 100 (white). b and a represent chrominance coordinates, where a represents the red-green axis and b represents the yellow-blue axis. Values of b and a range from 0 to 10. If a = b = 0, it is colorless. Therefore, L indicates a ratio coefficient from black to white. The idea of using opponent color coordinates is from the notion that colors cannot be red and green at the same time, or yellow and blue at the same time, but colors can be a combination of red and yellow, a combination of red and blue, a combination of green and yellow, and a combination of green and blue. All colors can be represented by the three values L*a*b*.

The formation of the CIE LAB color space unifies colors, color description languages, and operation specifications. The CIE LAB color space is currently common space for measuring an object color and is widely used in many fields. A CIE Lch color model uses same color space as L*a*b*, but the CIE Lch color model uses L to represent a luminance value, c to represent a purity value, and h to represent a hue value.

Luminance is a feeling of an eye on a degree of lightness and darkness of a light source and a surface of an object. Luminance may not only determine a lighting degree of the object, but also determine a reflection coefficient of the surface of the object. Purity usually refers to brilliance of a color. From a scientific point of view, brilliance of a color depends on the singleness of emitted light in the hue. The characteristic of the hue depends on spectral composition of the light source and the human eye perception based on a ratio of radiation of all wavelengths reflected by the surface of a colored object, is a qualitative appearance that can be presented by colors, and is a standard for distinguishing different colors.

When a color difference between two colors is determined, a distance between two color values may be calculated. The Lch space is color space close to the Lab space. The Lch space and the Lab space each have a relatively small error with human eye perception, and have relatively consistent performance in different hues. In most cases, the Lab color space is usually used to describe colors. In some cases, for example, a case in which the luminance and purity remain unchanged but the hue changes, the Lch is usually used to describe colors.

A method for configuring a theme color of a terminal device according to embodiments of this application may be applied to a terminal device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

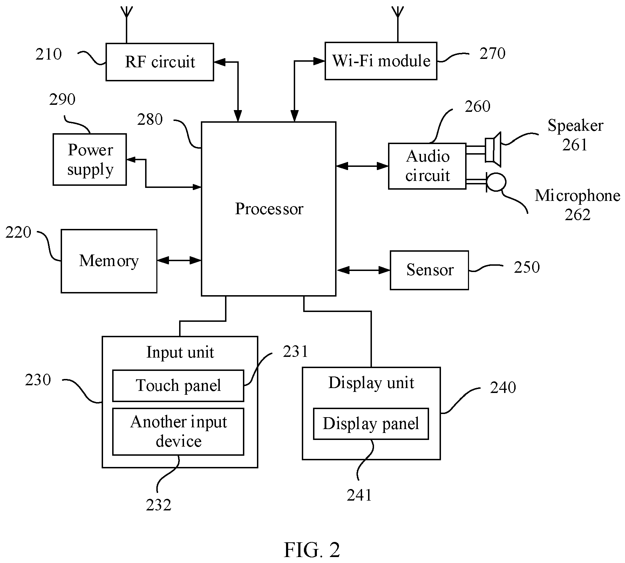

For example, the terminal device is a mobile phone. FIG. 2 is a block diagram of a partial structure of a mobile phone according to an embodiment of this application. As shown in FIG. 2, the mobile phone includes components such as a radio frequency (Radio Frequency, RF) circuit 210, a memory 220, an input unit 230, a display unit 240, a sensor 250, an audio circuit 260, a wireless fidelity (wireless fidelity, Wi-Fi) module 270, a processor 280, and a power supply 290. A person skilled in the art may understand that the structure of the mobile phone shown in FIG. 2 does not constitute a limitation on the mobile phone, and the mobile phone may include more or fewer components than those shown in the figure, or some components may be combined, or different component arrangements may be used.

The following specifically describes the components of the mobile phone with reference to FIG. 2.

The RF circuit 210 may be configured to receive and send signals during information receiving and sending or during a call; particularly, after receiving downlink information of a base station, send the downlink information to the processor 280 for processing; and send uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the RF circuit 210 may further communicate with a network and another device through wireless communication. The wireless communication may use any communications standard or protocol, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short messaging service (Short Messaging Service, SMS), and the like.

The memory 220 may be configured to store a software program and a module. The processor 280 performs various function applications of the mobile phone and data processing by running the software program and the module that are stored in the memory 220. The memory 220 may mainly include a program storage area and a data storage area. The program storage area may store an operating system, an application required by at least one function (such as a sound play function and an image play function), and the like. The data storage area may store data (such as audio data and a phone book) created based on use of the mobile phone, and the like. In addition, the memory 220 may include a high-speed random access memory, or may include a nonvolatile memory such as at least one magnetic disk storage device, a flash memory, or another volatile solid-state storage device.

The input unit 230 may be configured to receive entered digital or character information, and generate key signal input related to a user setting and function control of the mobile phone 200. Specifically, the input unit 230 may include a touch panel 231 and another input device 232. The touch panel 231, also referred to as a touchscreen, may collect a touch operation of the user on or near the touch panel 231 (such as an operation of the user on or near the touch panel 231 by using any suitable object or accessory such as a finger or a stylus), and drive a corresponding connection apparatus according to a preset program. Optionally, the touch panel 231 may include two parts: a touch detection apparatus and a touch controller. The touch detection apparatus detects a touch location of the user, detects a signal brought by a touch operation, and delivers the signal to the touch controller. The touch controller receives touch information from the touch detection apparatus, converts the touch information into touch point coordinates, sends the touch point coordinates to the processor 280, and receives and executes a command sent by the processor 280. In addition, the touch panel 231 may be implemented in a plurality of types, such as a resistive type, a capacitive type, an infrared type, and a surface acoustic wave type. In addition to the touch panel 231, the input unit 230 may further include the another input device 232. Specifically, the another input device 232 may include but is not limited to one or more of a physical keyboard, a functional button (such as a volume control button or a power button), a trackball, a mouse, a joystick, and the like.

The display unit 240 may be configured to display information entered by the user or information provided for the user, and various menus of the mobile phone. The display unit 240 may include a display panel 241. Optionally, the display panel 241 may be configured in a form of a liquid crystal display (Liquid Crystal Display, LCD), an organic light-emitting diode (Organic Light-Emitting Diode, OLED), or the like. Further, the touch panel 231 may cover the display panel 241. After detecting a touch operation on or near the touch panel 231, the touch panel 231 transfers the touch operation to the processor 280, to determine a type of a touch event. Subsequently, the processor 280 provides a corresponding visual output on the display panel 241 based on the type of the touch event. Although in FIG. 2, the touch panel 231 and the display panel 241 serve as two independent components to implement input and input functions of the mobile phone. However, in some embodiments, the touch panel 231 and the display panel 241 may be integrated to implement the input and output functions of the mobile phone.

The mobile phone 200 may further include at least one sensor 250, for example, an optical sensor, a motion sensor, and another sensor. Specifically, the optical sensor may include an ambient light sensor and a proximity sensor. The ambient light sensor may adjust luminance of the display panel 241 based on brightness of ambient light. The proximity sensor may power off the display panel 241 and/or backlight when the mobile phone moves to an ear. As one type of the motion sensor, an accelerometer sensor may detect acceleration values in various directions (usually on three axes). The accelerometer sensor may detect a value and a direction of gravity when the accelerometer sensor is stationary, and may be applied to an application for recognizing a mobile phone posture (such as switching between a landscape mode and a vertical mode, a related game, and magnetometer posture calibration), a function related to vibration recognition (such as a pedometer and a knock), and the like. Other sensors such as a gyroscope, a barometer, a hygrometer, a thermometer, and an infrared sensor may be further configured in the mobile phone. Details are not described herein.

The audio circuit 260, a speaker 261, and a microphone 262 may provide an audio interface between the user and the mobile phone. The audio circuit 260 may convert received audio data into an electrical signal, and then transmit the electrical signal to the speaker 261, and the speaker 261 converts the electrical signal into a sound signal for output. In addition, the microphone 262 converts a collected sound signal into an electrical signal. The audio circuit 260 receives the electrical signal, converts the electrical signal into audio data, and then outputs the audio data to the processor 280 for processing. After the processing, the processor 280 sends the audio data to, for example, another mobile phone by using the RF circuit 210, or outputs the audio data to the memory 220 for further processing.

Wi-Fi is a short-distance radio transmission technology. The mobile phone can help, by using the Wi-Fi module 270, the user to receive and send emails, browse a web page, access streaming media, and the like, to provide wireless broadband internet access for the user. Although FIG. 2 shows the Wi-Fi module 270, it can be understood that the Wi-Fi module 270 is not a necessary component of the mobile phone 200, and when required, the Wi-Fi module 270 can be omitted in a scope without changing essence of the present invention.

The processor 280 is a control center of the mobile phone and is connected to all parts of the entire mobile phone through various interfaces and lines, and performs various functions of the mobile phone and data processing by running or executing the software program and/or the module stored in the memory 220 and invoking data stored in the memory 220, to perform overall monitoring on the mobile phone. Optionally, the processor 280 may include one or more processing units. Preferably, an application processor and a modem processor may be integrated into the processor 280. The application processor mainly processes an operating system, a user interface, an application, and the like. The modem processor mainly processes wireless communication. It may be understood that the modem processor may not be integrated into the processor 280.

The mobile phone 200 further includes the power supply 290 (such as a battery) that supplies power to each component. Preferably, the power supply may be logically connected to the processor 280 by using a power management system, to implement functions such as charging management, discharging management, and power consumption management by using the power management system.

Although not shown in the figure, the mobile phone 200 may further include a camera. Optionally, a position of the camera on the mobile phone 200 may be front-facing or rear-facing. This is not limited in this embodiment of this application.

Optionally, the mobile phone 200 may include a single camera, dual-camera, triple-lens camera, or the like. This is not limited in this embodiment of this application.

For example, the mobile phone 200 may include a triple-lens camera, where one is a primary camera, one is a wide-angle camera, and one is a long-focus camera.

Optionally, when the mobile phone 200 includes a plurality of cameras, the plurality of cameras may be all front-facing, or all rear-facing, or partially front-facing and partially rear-facing. This is not limited in this embodiment of this application.

In addition, although not shown in the figure, the mobile phone 200 may further include a Bluetooth module and the like. Details are not described herein.

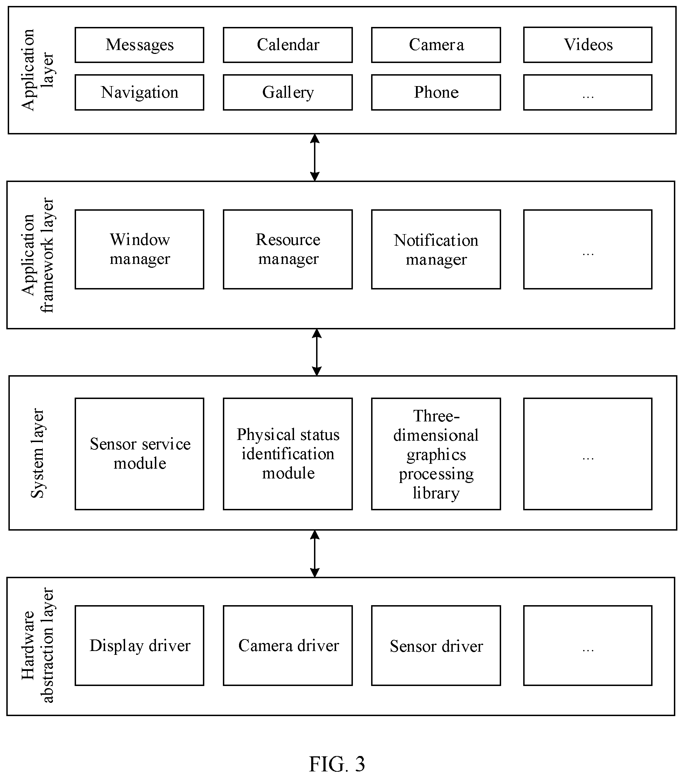

FIG. 3 is a schematic diagram of a software structure of a mobile phone 200 according to an embodiment of this application. For example, an operating system of the mobile phone 200 is an Android system. In some embodiments, the Android system is divided into four layers: an application layer, an application framework layer (framework, FWK), a system layer, and a hardware abstraction layer. The layers communicate with each other through a software interface.

As shown in FIG. 3, the application layer may include a series of application packages, and the application packages may include applications such as Messages, Calendar, Camera, Videos, Navigation, Gallery, and Phone.

The application framework layer provides an application programming interface (application programming interface, API) and a programming framework for an application at the application layer. The application framework layer may include some predefined functions, such as a function for receiving an event sent by the application framework layer.

As shown in FIG. 3, the application framework layer may include a window manager, a resource manager, a notification manager, and the like.

The window manager is configured to manage a window program. The window manager may obtain a size of the display, determine whether there is a status bar, perform screen locking, take a screenshot, and the like. A content provider is configured to store and obtain data, and enable the data to be accessed by an application. The data may include a video, an image, audio, calls that are made and answered, a browsing history and bookmarks, an address book, and the like.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The application framework layer may further include a view system.

The view system includes visual controls such as a control for displaying a text and a control for displaying an image. The view system may be configured to construct an application. A display interface may include one or more views. For example, a display interface including an SMS message notification icon may include a text display view and an image display view.

A phone manager is configured to provide a communication function of the mobile phone 200, for example, management of a call status (including answering, declining, or the like).

The system layer may include a plurality of function modules, for example, a sensor service module, a physical status identification module, and a three-dimensional graphics processing library (for example, OpenGL ES).

The sensor service module is configured to monitor sensor data uploaded by various types of sensors at a hardware layer, to determine a physical status of the mobile phone 200.

The physical status identification module is configured to analyze and identify a user gesture, a face, and the like.

The three-dimensional graphics processing library is configured to implement three-dimensional graphics drawing, image rendering, composition, layer processing, and the like.

The system layer may further include the following.

A surface manager is configured to manage a display subsystem and provide fusion of 2D and 3D layers for a plurality of applications.

A media library supports playback and recording in a plurality of commonly used audio and video formats, and static image files. The media library may support a plurality of audio and video coding formats such as MPEG-4, H.264, MP3, AAC, AMR, JPG, and PNG.

The hardware abstraction layer is a layer between hardware and software. The hardware abstraction layer may include a display driver, a camera driver, a sensor driver, and the like, and is configured to drive related hardware, for example, a display, a camera, and a sensor, at the hardware layer.

The following embodiments may be implemented in the mobile phone 200 having the foregoing hardware structure/software structure. In the following embodiment, the mobile phone 200 is used as an example to describe the method for configuring a theme color of a terminal device according to this embodiment of this application.

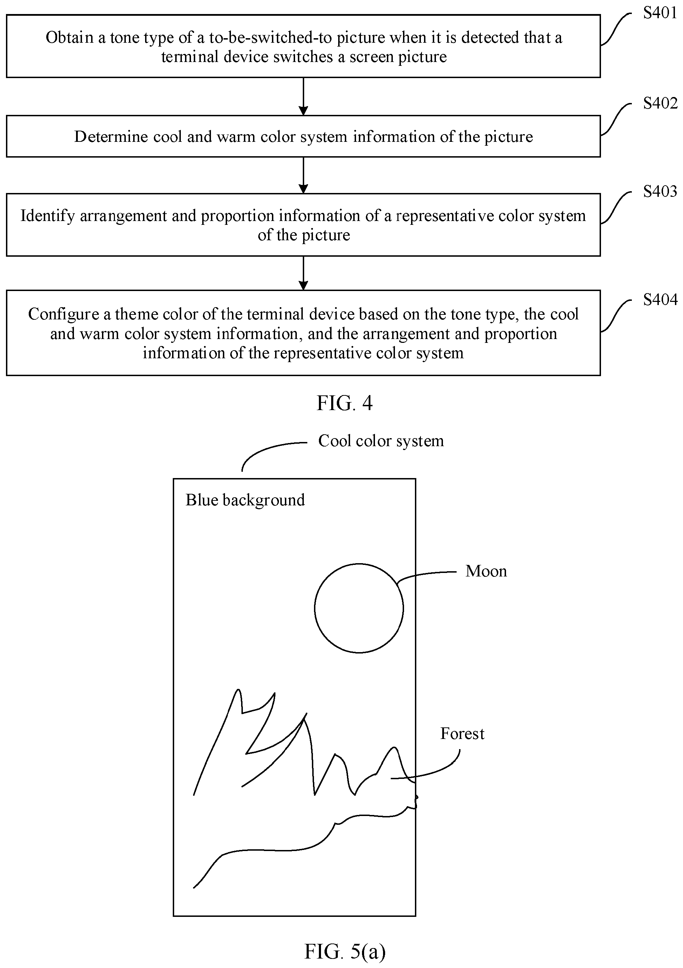

FIG. 4 is a schematic flowchart of steps of a method for configuring a theme color of a terminal device according to an embodiment of this application. By way of example and not limitation, the method may be applied to the foregoing mobile phone 200, and the method may specifically include the following steps.

S401: Obtain a tone type of a to-be-switched-to picture when it is detected that a terminal device switches a screen picture.

In this embodiment of this application, the screen picture may be a picture used as a screen wallpaper. The picture may be captured by the mobile phone in real time by using a front-facing camera or a rear-facing camera, or may be selected from a photo album of the mobile phone, or may be a screen lock picture of the mobile phone, or the like. Neither a source nor a type of the foregoing picture is limited in this embodiment.

For example, a picture is selected from the photo album of the mobile phone as the picture. When the user triggers picture change by using a setting function provided by the mobile phone, the user may select a picture from the photo album of the mobile phone as the to-be-switched-to picture. Then, the mobile phone may set the picture as a new picture.

In this embodiment of this application, to keep a style of a theme of the mobile phone consistent with that of the new picture as much as possible, colors of controls related to the theme of the mobile phone may be adjusted based on the style of the picture. In this process, the tone type of the new to-be-switched-to picture may be first determined.

The tone type in this embodiment may refer to a picture tonality of the picture used as a new screen wallpaper. The picture tonality reflects impact of contrast of light and dark colors in the picture on psychological acceptance of a user, and reflects a status of the light and dark colors of the picture. In different color space, the picture tonality may be classified in different manners. For example, in Lch space, the picture tonality may include a saturated (saturated) type, a light (light) type, a dark (dark) type, or the like.

S402: Determine cool and warm color system information of the picture.

In this embodiment of this application, the cool and warm color system information of the picture may be a cool and warm style reflected by colors included in the picture.

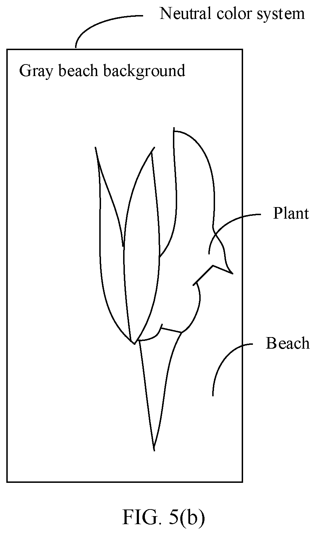

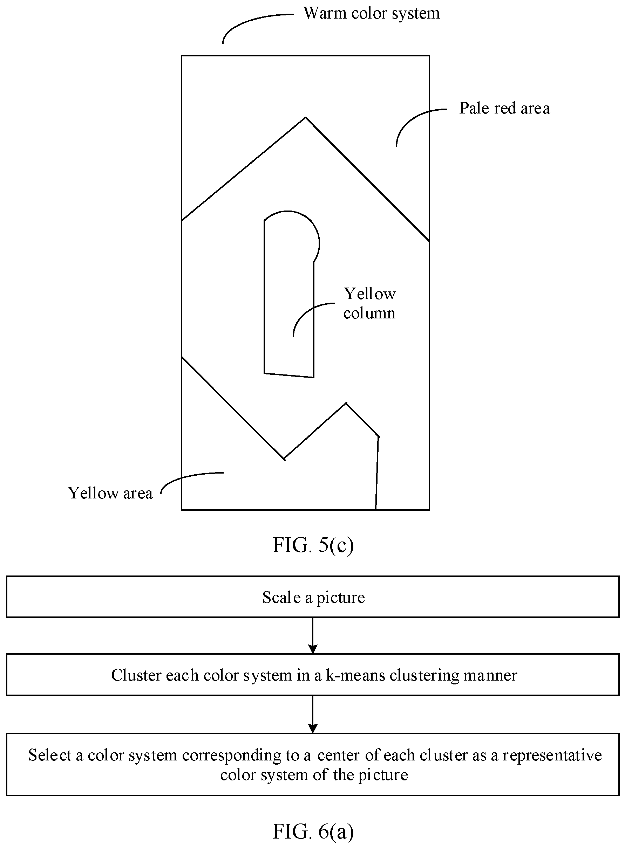

FIG. 5(a), FIG. 5(b), and FIG. 5(c) are schematic diagrams of three cool and warm color systems of pictures. According to colors included in each picture, it may be determined that the picture belongs to a cool color system, a neutral color system, or a warm color system.

For example, in FIG. 5(a), there is a forest in moonlight in the wallpaper, an overall display background of the wallpaper is blue, and a scene in the entire wallpaper belongs to a cool color system. In FIG. 5(b), there is a plant placed on a beach in the wallpaper, and based on a display effect of the gray beach, a scene in the entire wallpaper belongs to a neutral color system. In FIG. 5(c), there is a large pale red area and a red area in the wallpaper, and an overall style of the wallpaper is pleasant. Therefore, a scene in the wallpaper belongs to a warm color system.

In specific implementation, the cool and warm color system information may be obtained through computing by using a plurality of methods in a color affective computing manner. A used computing method is not limited in this embodiment.

S403: Identify arrangement and proportion information of a representative color system of the picture.

In this embodiment of this application, identifying arrangement and proportion information of a representative color system of the picture is to extract a color of the picture, to find a plurality of main color systems in the picture, an arrangement status of each color system in the picture, and a proportion of each color system.

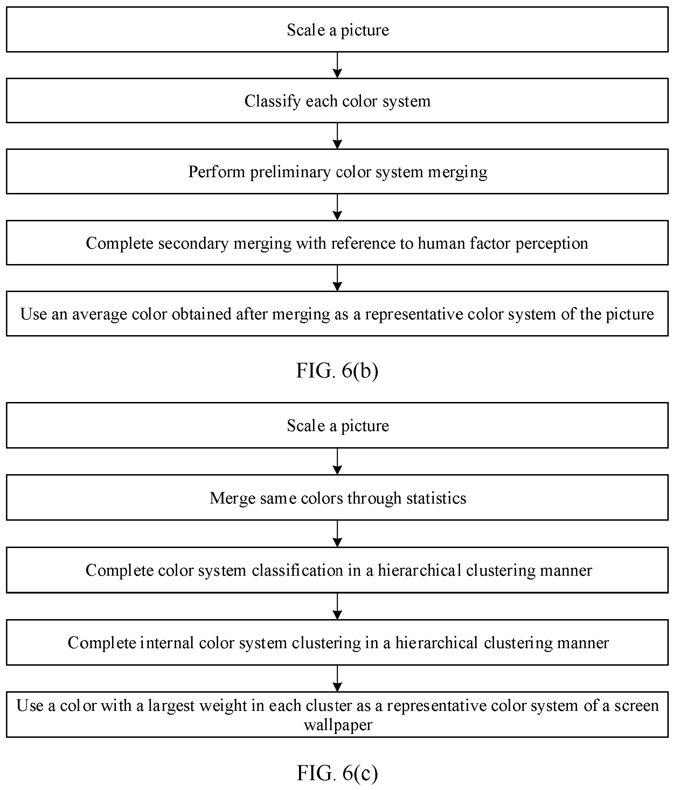

In specific implementation, color extraction may be performed in different manners. FIG. 6(a), FIG. 6(b), and FIG. 6(c) are respectively schematic diagrams of three different color extraction manners.

When color extraction is performed according to a color extraction scheme shown in FIG. 6(a), a picture may be first scaled, then each color system is clustered in a k-means clustering manner, and finally a color system corresponding to a center of each cluster is selected as a representative color system of the picture. When color extraction is performed according to the manner provided in FIG. 6(a), accuracy is low, color merging is rough, and a difference between an extracted color and the original picture is large.

FIG. 6(b) shows another color extraction scheme. A picture is scaled. After each color system is classified, preliminary color system merging is performed, and secondary merging is completed with reference to human factor perception. Finally, an average color after merging is used as a representative color system of the picture. Accuracy and efficiency of this color extraction manner are high, and color merging is fine. However, there is still a specific difference between an extracted color and the original picture.

Therefore, to improve accuracy of color extraction and reduce a difference between a color extraction result and an original picture, a color extraction scheme shown in FIG. 6(c) may be used in this embodiment of this application. After a picture is scaled, same colors are merged through statistics, and then color system classification and internal color system clustering are completed in a hierarchical clustering manner. Finally, a color with a largest weight in each cluster may be used as a representative color of the picture. Although this color extraction manner has relatively low efficiency, color extraction accuracy is very high, and the most representative color system can be selected from the original picture.

Certainly, according to different actual requirements, a person skilled in the art may select an appropriate color extraction manner according to a specific situation, which is not limited to the foregoing three schemes. A specific color extraction manner is not limited in this embodiment.

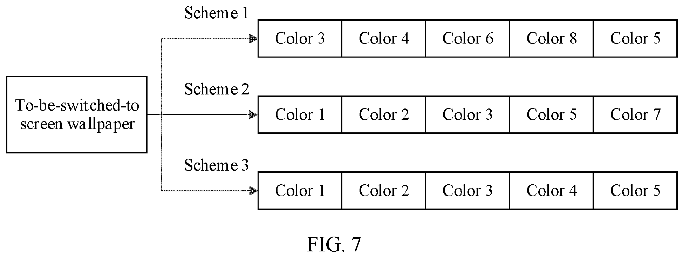

FIG. 7 is a schematic diagram of color extraction results obtained by performing color extraction in different manners. The foregoing three different color extraction schemes are separately used to perform color extraction on a wallpaper provided in FIG. 7. A scheme 1 is a color extraction scheme corresponding to FIG. 6(a), a scheme 2 is a color extraction scheme corresponding to FIG. 6(b), and a scheme 3 shows five representative color systems of a picture that are obtained by performing color extraction according to the color extraction scheme provided in FIG. 6(c).

S404: Configure a theme color of the terminal device based on the tone type, the cool and warm color system information, and the arrangement and proportion information of the representative color system.

In this embodiment of this application, after the tone type of the picture is obtained, the cool and warm color system information is computed, and color extraction for the representative color system of the picture is completed, the theme color of the mobile phone may be configured based on different tone types, cool and warm color system information, and representative color systems, so that a color presented by each control or text in the mobile phone matches a style of the picture as much as possible.

In this embodiment of this application, when it is detected that the terminal device switches the picture, after the tone type of the to-be-switched-to picture is obtained, the cool and warm color system information of the picture is determined, and the arrangement and proportion information of the representative color system of the picture is identified, the theme color of the terminal device may be configured based on the tone type, the cool and warm color system information, and the arrangement and proportion information of the representative color system, so that the style of the theme of the system can keep consistent with the style of the picture or the environment, without affecting use of basic interaction functions of controls of various colors in the system. This improves accuracy of computer vision processing.

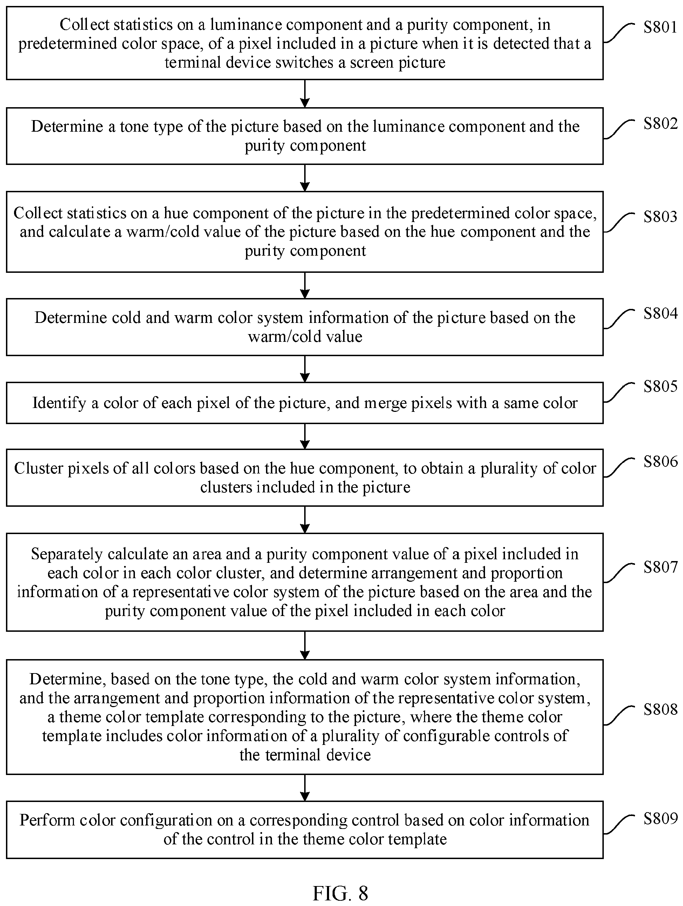

FIG. 8 is a schematic flowchart of steps of a method for configuring a theme color of a terminal device according to another embodiment of this application, and the method may specifically include the following steps.

S801: Collect statistics on a luminance component and a purity component, in predetermined color space, of a pixel included in a picture when it is detected that a terminal device switches to the picture.

Usually, a picture used as a picture may include several pixels, and each pixel has a corresponding pixel value. In different color space, the pixel of each pixel may be split into a plurality of different components of the space. For example, in RGB space, the pixel value of each pixel may be split into three component values: R, G, and B. In Lch space, the pixel value may be split into three component values: L, c, and h, that is, a luminance component value L, a purity component value c, and a hue component value h.

In this embodiment of this application, the predetermined color space may be the Lch color space. Therefore, when a tone type of the to-be-switched-to picture is determined, the pixel value of each pixel in the picture may be first read, then the pixel value of each pixel is split into the luminance component value L and the purity component value c in the predetermined color space Lch, a quantity of pixels corresponding to each luminance component value L is collected to obtain a luminance component of the picture, and a quantity of pixels corresponding to each purity component value c is collected to obtain a purity component of the picture.

In specific implementation, after the pixel value of each pixel is split into the values of L, c, and h in the Lch space, a quantity of same values of each of L, c, and h may be separately collected, to obtain a corresponding component distribution status.

The luminance component value L is used as an example. Each pixel has an L value. Assuming that a value range of the L value is 0 to 100, a quantity of pixels whose L values are 0 may be collected, a quantity of pixels whose L values are 1 may be collected, and so on, until a quantity of pixels whose L values are 100 is collected. A schematic diagram of a distribution status of the luminance component L may be generated based on a final statistical result.

Similarly, for the purity component value c, a schematic diagram of a distribution status of the purity component c may also be obtained in the foregoing manner.

S802: Determine the tone type of the picture based on the luminance component and the purity component.

In this embodiment of this application, after the distribution status of the L component and the c component in the Lch space is obtained, it may be determined, based on the distribution status, whether the tone type of the picture is a saturated type, a light type, or a dark type.

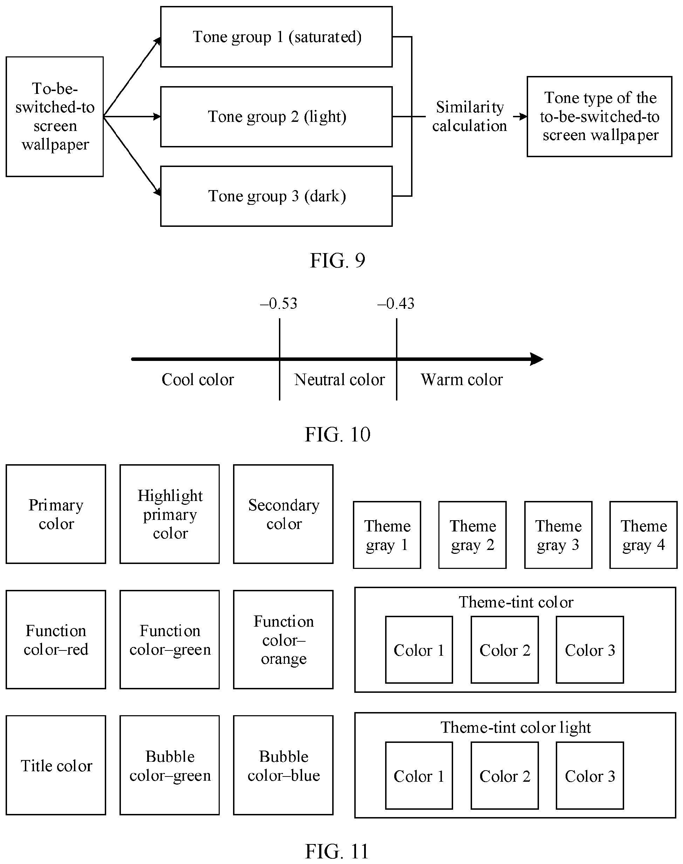

FIG. 9 is a schematic diagram of a process of determining a tone type according to an embodiment of this application. According to the process shown in FIG. 9, luminance components and purity components of a plurality of sample wallpapers may be clustered in advance to obtain a plurality of tone groups that separately belong to a saturated type, a bright type, or a dark type. Then, when the tone type of the to-be-switched-to picture needs to be determined, a luminance similarity between the luminance component and a luminance component of a center of each of the plurality of preset tone groups may be separately calculated, and a purity similarity between the purity component and a purity component of the center of each of the plurality of tone groups may be separately calculated, to determine the tone type of the picture based on the luminance similarity and the purity similarity.

It should be noted that, when the tone type of the picture is determined based on the plurality of tone groups obtained through clustering in advance, distribution statuses of the L component and the c component need to be compared at the same time, that is, distances between a center of each tone group and both the luminance component and the purity component are calculated at the same time, and a tone group closest to a center is selected as a classification result of the to-be-switched-to wallpaper. In this embodiment, the plurality of tone groups are generated in advance, so that a clustering result can be used for tone classification of more pictures, and the classification accuracy can be improved.

S803: Collect statistics on a hue component of the picture in the predetermined color space, and calculate a warm/cool value of the picture based on the hue component and the purity component.

In this embodiment of this application, the hue component in the predetermined color space is the h component in the Lch space. The h component may be used to represent a specific color, for example, red, green, or blue. This is a hue of the color. Using a red color system as an example, red may be further subdivided into light red, dark red, and the like. This is a result obtained when the luminance component L takes effect in a same hue.

The warm/cool value of the picture may be obtained through calculation in a color affective computing manner based on the determined component L and component h.

In specific implementation, the warm/cool value of the picture may be calculated by using the following formula:

$$WC = -0.5 + 0.02 * c * \cos(h - 50)$$

WC is a calculated warm/cool value, c is the purity component described above, h is the hue component, and the operator "*" represents a multiplication sign.

S804: Determine cool and warm color system information of the picture based on the warm/cool value.

In this embodiment of this application, the cool and warm color system information of the picture may be determined based on a range of the warm/cool value obtained through calculation according to the foregoing formula.

FIG. 10 is a schematic diagram of a warm/cool value range according to an embodiment of this application. After the warm/cool value of the picture is calculated according to the formula $WC = -0.5 + 0.02 * c * \cos(h - 50)$, the cool and warm color system information of the wallpaper may be determined according to a range, in FIG. 10, in which the value is located.

For example, if the calculated warm/cool value is less than -0.53, it may be determined that the wallpaper belongs to a cool color system; if the calculated warm/cool value is greater than -0.43, it may be determined that the wallpaper belongs to a warm color system; or if the warm/cool value is a ratio between the two values, it may be determined that the wallpaper belongs to a neutral color system.

S805: Identify a color of each pixel of the picture, and merge pixels with a same color.

In this embodiment of this application, before color extraction is performed on the picture, the wallpaper may be first scaled to reduce a calculation amount of subsequent processing.

For a scaled picture, the color of each pixel may be first identified, and then pixels of a same color are merged.

For example, a picture that is scaled to a specification of 10 x 10 includes 100 pixels. During processing, a quantity of white pixels, a quantity of red pixels, and the like may be first identified. After statistics collection is completed, pixels of a same color may be merged. If there are 10 white pixels in total, it indicates that a proportion of a white color system in the entire picture is 10%.

S806: Cluster pixels of various colors based on the hue component, to obtain a plurality of color clusters included in the picture.

After merging processing on the pixels of a same color is completed, the pixels of various colors may be clustered, to obtain the plurality of color clusters included in the picture.

In specific implementation, clustering of the pixels may be completed in a manner of two times of hierarchical clustering. The first time of hierarchical clustering is color system classification, and the second time of hierarchical clustering is internal color system clustering, so that accuracy of color extraction can be improved.

S807: Separately calculate an area and a purity component value of a pixel included in each color in each color cluster, and determine arrangement and proportion information of a representative color system of the picture based on the area and the purity component value of the pixel included in each color.

In this embodiment of this application, the representative color system of the picture may be a color that accounts for a largest proportion in each color cluster obtained through clustering. The proportion may be obtained by weighting the area and the purity of the pixel in each color included in the color cluster.

Therefore, weighted summation may be performed on the area and purity component value of the pixel included in each color in each color cluster based on preset weights, to obtain a weighted summation value of each color in each color cluster, and then a plurality of representative color systems of the picture are determined from each color cluster based on the weighted summation value. That is, a color with a largest weighted summation value is selected from each color cluster as a representative color of the color cluster, and representative colors of all color clusters jointly form a representative color system of the entire picture.

Usually, five colors may be selected as representative color systems of the picture according to an actual requirement.

S808: Determine, based on the tone type, the cool and warm color system information, and the arrangement and proportion information of the representative color system, a theme color template corresponding to the picture, where the theme color template includes color information of a plurality of configurable controls of the terminal device.

Usually, a theme color template (Theme Color Template) includes color information of a plurality of configurable controls of a terminal device such as a mobile phone. The configurable space is a control whose theme color is allowed to be modified when a user changes a picture of the device.

FIG. 11 is a schematic diagram of a theme color template according to an embodiment of this application. Configurable controls may include a primary color control, a highlight primary color control, a secondary color control, a title color control, a theme gray control, a theme-tint color control, a theme-tint color light control, a function color control, a bubble color control, and the like. In the theme color template, each configurable control has corresponding color information.

Therefore, after a tone type, cool and warm color system information, and arrangement and proportion information of a representative color system of a to-be-switched-to picture are determined, a specific color of each configurable control in a mobile phone may be determined according to the foregoing three types of information.

The following describes how to configure colors for different types of controls.

(1) Primary color Theme Primary

This is a color that can be configured for the primary color control. Usually, in a terminal device such as a mobile phone, a primary color is a color that needs to be filled in a large area.

For example, in a function interface of the mobile phone, a color presented at the top of a screen is the same as the primary color.

In this embodiment of this application, when the primary color is determined, a plurality of specific representative color systems and an area of pixels included in each representative color system may be first determined. Various representative color systems may be classified into a first color system, a second color system, a third color system, and the like based on the area of pixels included in each representative color system. The first color system is a color system with a largest area of pixels in all representative color systems, the second color system is a color system with a second largest area of pixels in all the representative color systems, and so on.

If the plurality of representative color systems include a gray color system, and an area of pixels included in the gray color system is greater than a first proportion of the second color system, a color corresponding to the gray color system may be configured as the primary color, that is, a color of the primary color control. If the plurality of representative color systems do not include a gray color system, or the area of pixels included in the gray color system is not the largest, or the area of pixels included in the gray color system is not greater than the first proportion of the second color system, a color corresponding to a color system with a largest area of pixels in color systems other than the gray color system may be configured as the primary color.

In specific implementation, the first proportion may be set to 20%, that is, the representative color systems include a gray color system, and an area of the gray color system is the largest and exceeds an area of a next color system by 20%. In this case, the gray color system may be used as the primary color; otherwise, another color system with a largest area in the plurality of representative color systems may be used as the primary color.

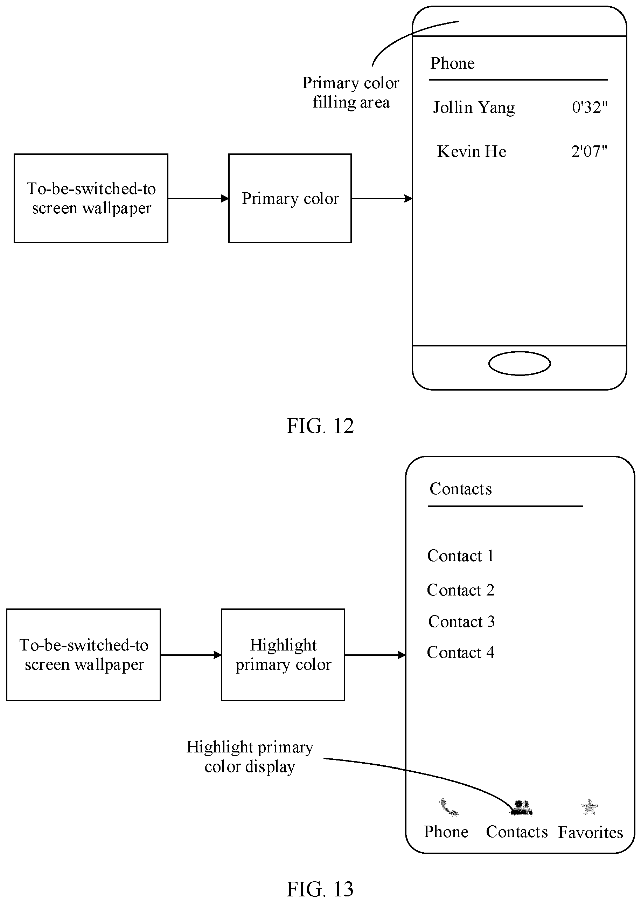

FIG. 12 is a schematic diagram of primary color configuration according to an embodiment of this application. After the primary color is identified from a to-be-switched-to picture, the color can be configured in a corresponding primary color control area. In FIG. 12, the primary color control area is an area at the top of the screen in a function interface of the mobile phone. This area may be filled with the primary color.

(2) Highlight primary color Theme High Light

Usually, as an interactive color, the highlight primary color needs to be visually attractive enough, and the purity needs to be ensured to be high enough. In addition, the highlight primary color used for some texts further needs to ensure readability, and luminance cannot be set to be too high.

In this embodiment of this application, the highlight primary color is from the primary color, that is, the color corresponding to the primary color control. The primary color may be adjusted based on the tone type of the picture to obtain the highlight primary color. Certainly, highlight primary colors corresponding to different tone types need to separately meet preset luminance and purity requirements of the tone type.

In specific implementation, according to different picture tone types, fine adjustment may be separately performed on a luminance value and a purity value of the primary color to obtain the highlight primary color.

For example, if the tone type is dark (dark), when a luminance value $L$ of the primary color is less than 20, the luminance value $L$ and a purity value $c$ may be separately increased by 18. When the luminance value $L$ of the primary color is greater than or equal to 20 and the purity value $c$ is less than 16, the luminance value of the highlight primary color may be set to 20, and the purity value is increased by 18 based on the purity value of the primary color. When the luminance value $L$ of the primary color is greater than or equal to 20 and the purity value $c$ is greater than or equal to 16, the luminance value of the highlight primary color may be set to 50, and the purity value is increased by 40 based on the purity value of the primary color.

If the tone type is light (light), when the purity value $c$ of the primary color is less than 16, the luminance value of the highlight primary color may be set to 20, and the purity value is increased by 18 based on the purity value of the primary color. When the purity value $c$ of the primary color is greater than or equal to 16, the luminance value of the highlight primary color may be set to 60, and the purity value is increased by 40 based on the purity value of the primary color.

If the tone type is saturated (saturated), when the purity value $c$ of the primary color is less than 16, the luminance value of the highlight primary color may be set to 20, and the purity value is increased by 18 based on the purity value of the primary color. When the purity value $c$ of the primary color is greater than or equal to 16, the luminance value of the highlight primary color may be set to 55, and the purity value is increased by 40 based on the purity value of the primary color.

Through the foregoing fine adjustment, it can be ensured that the highlight primary color has sufficient visual attraction, and it is also ensured that a text part with the highlight primary color has relatively high readability.

FIG. 13 is a schematic diagram of highlight primary color configuration according to an embodiment of this application. In FIG. 13, the highlight primary color may be a color of a name in a function interface when the mobile phone switches to the function interface, for example, a "Contacts" label in FIG. 13.

(3) Secondary color Theme Secondary

In this embodiment of this application, different secondary colors, that is, colors configured for a secondary color control, may be separately determined based on different tone types of a picture.

In this embodiment of this application, if the tone type of the picture is light (light) or dark (dark), statistics may be collected on whether an area of pixels included in another color system other than the highlight primary color is greater than a second proportion. If an area of pixels included in another color system is greater than the second proportion, a color corresponding to a color system with a largest area in the another color system may be configured as the secondary color. If no area of pixels included in another color system is greater than the second proportion, the highlight primary color may be configured as the secondary color. The second proportion may be set to 5%.

In specific implementation, if the tone type is light (light) or dark (dark), it may be calculated whether an area of another color system other than the highlight primary color exceeds 5% of the total area of the picture. If areas of other color systems exceed 5% of the total area of the picture, a color system with a largest area in these color systems may be used as the secondary color. Certainly, after the color system with a largest area is used as the secondary color, luminance and purity of the color may be further adjusted.

For example, if the luminance value L of the selected secondary color is between 45 and 74, and the purity value c is greater than or equal to 50, the color may be directly used as the finally configured secondary color. If the luminance value L is between 35 and 45, and the purity value c is greater than or equal to 50, the luminance value of the color may be adjusted to 45 for use. If the luminance value L is between 75 and 85, and the purity value c is greater than or equal to 50, the luminance value of the color may be adjusted to 75 for use. If the luminance value L is between 45 and 74, and the purity value c is between 25 and 50, the purity value of the color may be adjusted to 50 for use.

For a picture whose tone type is light (light) or dark (dark), if an area of any color system other than the highlight primary color does not exceed 5% of an area of the picture, a color that is the same as the highlight primary color may be used as the secondary color.

In addition, if the tone type of the picture is saturated (saturated), the secondary color may be configured based on a quantity of representative color systems of the picture. That is, the specific secondary color is determined based on whether a representative color system of the picture is a single color system, a dual color system, or a multi-color system.

For example, if the picture has a single color system, a primary color with a largest area may be used as the secondary color. If the picture has a dual color system, a color corresponding to a color system with a second largest area may be used as the secondary color. If the picture has a multi-color system, a color with a largest area among other color systems whose areas are not the largest may be used as the secondary color, where a difference between a luminance value of the color and the luminance value of the primary color is greater than 40.

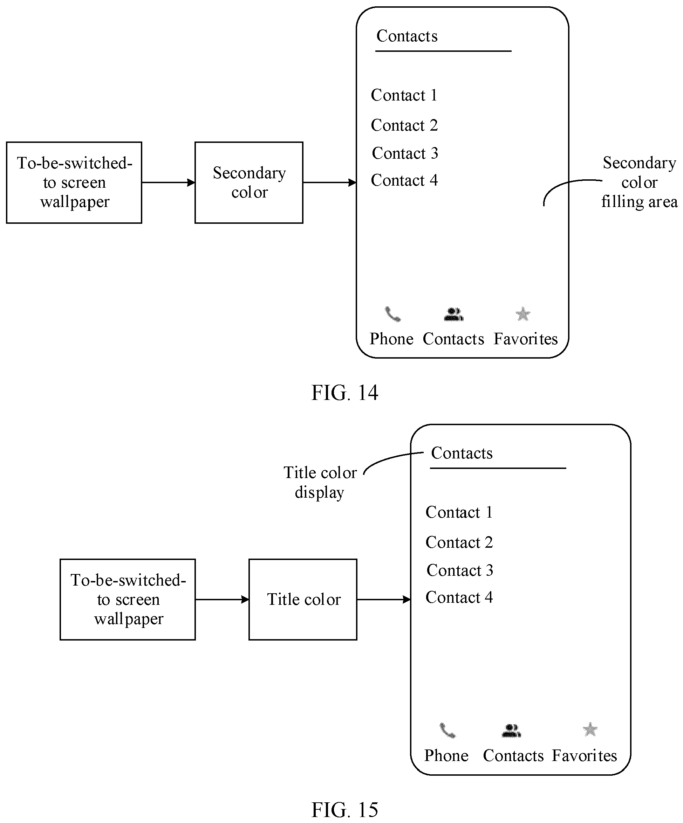

FIG. 14 is a schematic diagram of secondary color configuration according to an embodiment of this application. In FIG. 14, after a picture is processed to determine a secondary color that matches the wallpaper, a location such as a blank area of a similar function interface may be filled with the secondary color. This helps enhance the display effect of the theme.

(4) Title color Label

The title color is a color that needs to be presented for each title on a terminal device such as a mobile phone. Usually, the title color is from the primary color and needs to meet a readability requirement.

Therefore, in this embodiment of this application, the color of the primary color control may be configured as a color of a title color control, and the color of the title color control may be adjusted to meet preset luminance and purity requirements for the title color.

In specific implementation, fine adjustment may be performed on the luminance value and the purity value of the primary color, to obtain the title color. For example, both the luminance value L and the purity value c of the primary color may be adjusted to 25, to obtain the finally used title color.

FIG. 15 is a schematic diagram of title color configuration according to an embodiment of this application. The title color may be used on the title of each page or control, such as a title "Contacts" in FIG. 15.

(5) Theme gray Theme Grey

A gray level refers to a level of a tone of electromagnetic wave radiation intensity of an object on a black-and-white image, and is the scale for dividing object spectral characteristics.

In this embodiment of this application, the primary color may be used to match a plurality of gray levels with different luminance and purity, to find a closest gray level and to obtain a color of the theme gray control, so that the theme gray control has a gray tone of a subtle hue.

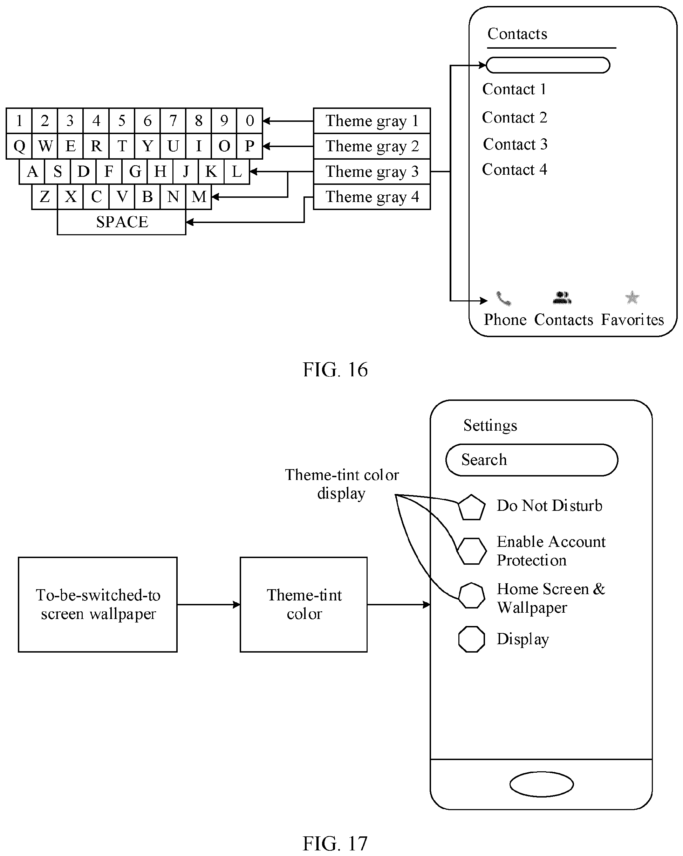

FIG. 16 is a schematic diagram of theme gray configuration according to an embodiment of this application. For pictures of different tone types, a set of theme gray levels may be separately determined. For example, a set of theme gray levels is designed for the saturated (saturated) type, the light (light) type, and the dark (dark) type. In addition, each set of gray levels may further include gray tones of different colors, for example, red, yellow, and green. When the theme gray is determined based on the to-be-switched-to picture, matching may be performed on the corresponding primary color to obtain the final theme gray. For example, if the primary color is red, a set of theme gray levels corresponding to the tone type of the picture may be first found based on the type, and then a theme gray level corresponding to red is obtained through matching from the set of theme gray levels. If the primary color is green, a theme gray level corresponding to green may be obtained through matching from the set of theme gray levels.

Usually, the theme gray may be used in a screen display area in which gradient gray scale is required. For example, an input method in FIG. 16 or different areas of a same function page may use different theme gray.

It should be noted that the input method interface displayed in FIG. 16 is merely an example, and a complete input method interface is not drawn.

(6) Theme-tint color Theme-Tint Color

Generally, in an operating system of a terminal device, a theme-tint color usually appears in an entire set. During theme color configuration, the theme-tint color that matches the cool and warm color system information of the picture may be determined based on the cool and warm color system information of the picture.

For example, three sets of theme-tint colors may be designed in advance for a cool-color wallpaper, a warm-color wallpaper, and a neutral-color wallpaper, and each set of theme-tint colors may include a plurality of different colors. When the picture is switched, a theme-tint color corresponding to the cool and warm color system information may be directly invoked based on the cool and warm color system information of the wallpaper.

Certainly, during use, luminance and purity of the invoked theme-tint color may further be adjusted finely according to an actual requirement.

In specific implementation, the luminance and purity of the invoked theme-tint color may be adjusted according to the following formulas:

$$L = avgL + 0.85 * (75 - avgL)$$

$$c = avgc + 0.75 * (75 - avgc)$$

L and c are respectively the luminance value and purity value of the theme-tint color after fine adjustment, and avgL and avgc are respectively an average luminance value and an average purity value of each color in the invoked theme-tint color.

FIG. 17 is a schematic diagram of theme-tint color configuration according to an embodiment of this application. According to different cool and warm styles of a picture, after a theme-tint color of a corresponding style is invoked to adjust each color, the color may be used in a chart corresponding to each operation function in FIG. 17, to help better distinguish each function and facilitate identification by a user, for example, function labels such as "Do Not Disturb" and "Enable Account Protection" in FIG. 17.

(7) Theme-tint color light Theme-Tint Color Light

Similar to the theme-tint color, a theme-tint color light usually appears in an entire set. However, the luminance of the theme-tint color light is basically determined. Therefore, when the theme is changed, the entire set of the theme-tint color light is adjusted according to the cool and warm color system information of the picture.

Therefore, three sets of theme-tint color light may be designed in advance for a cool-color wallpaper, a warm-color wallpaper, and a neutral-color wallpaper. When the picture is switched, a corresponding theme-tint color light may be directly invoked according to the cool and warm color system information of the wallpaper.

It should be noted that, if a color very close to a corresponding theme-tint color or theme-tint color light appears in the to-be-switched-to picture, because the color can easily impress the user, the color may also be selected to replace the corresponding theme-tint color or theme-tint color light.

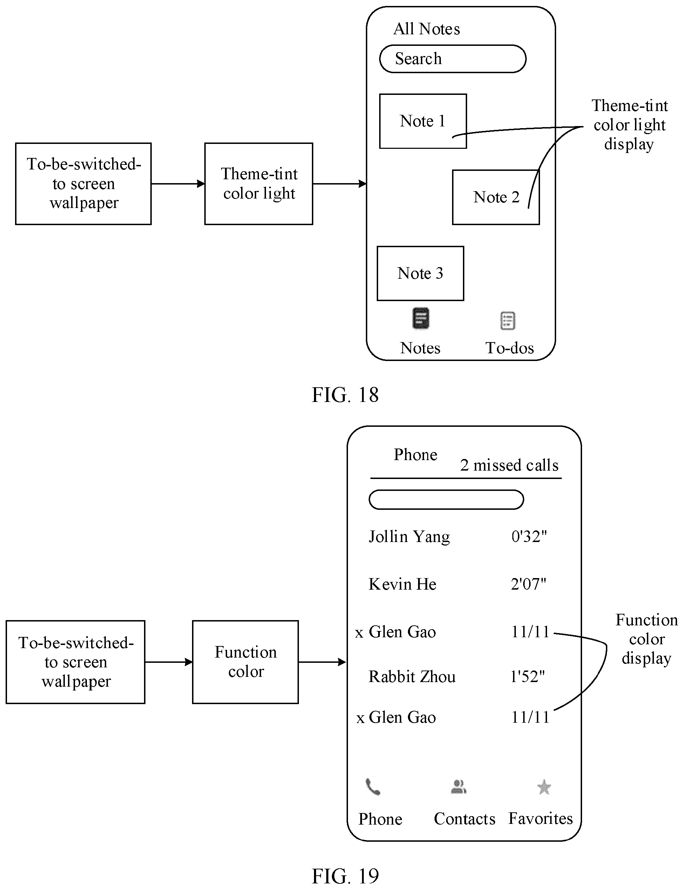

FIG. 18 is a schematic diagram of theme-tint color light configuration according to an embodiment of this application. Similar to the theme-tint color, the theme-tint color light of the corresponding style is used based on the cool and warm style of the picture. The theme-tint color light may be a color presented by "Note" in FIG. 18.

(8) Function color Theme Function Color

Usually, a function color has specific semantic cognition. When the function color is designed, the range of variations in which this semantic matching relationship holds may be explored.

In this embodiment of this application, if a color that has a specific threshold distance from a corresponding original color and whose luminance and purity also fall within specific ranges exists in the color extraction result, the color may be selected as the function color. The foregoing luminance and purity ranges may be determined according to a human factor experiment.

If such a color does not exist, the function color may be determined based on the cool and warm color system information of the picture.

The function color usually includes two color systems: red and green (in some cases, the function color may further include orange). Therefore, a plurality of sets of function colors may be preset, and the function color is adjusted based on the cool and warm style of the wallpaper while semantics of the function color remains unchanged.

In this embodiment of this application, after user research is performed on several features of the function color, an adjustment threshold of the luminance value L, the purity value c, and the hue value h of the function color may be determined.

The features of the function color are as follows:
Semantic consistency: It needs to be ensured that the adjusted function color does not change the original semantics of the function color.

Conspicuity: It needs to be ensured that the adjusted color can provide a specific prompt.

Readability: The function color is usually used on a text. Therefore, the adjusted function color needs to have specific contrast to ensure high readability.

For example, the function color is red. The following two examples of recommended adjustment ranges of the values of L, c, and h are obtained through a user experiment:
Solution 1:

|   | Cool color | Neutral color | Warm color |
|---|---|---|---|
| h | 0-20 | 20-40 | 40-50 |
| c | 800-100 | 80-100 | 80-100 |
| L | 40-50 | 40-60 | 45-60 |

Solution 2:

|   | Cool color | Neutral color | Warm color |
|---|---|---|---|
| h | 0-20 | 20-40 | 40-50 |
| c | 80-100 | 80-100 | 80-100 |
| L | 40-60 (L + c $\leq$ 140) | 40-60 | 45-60 |

FIG. 19 is a schematic diagram of function color configuration according to an embodiment of this application. The function color may be a color presented by missed call information when the missed call is displayed in FIG. 19.

(9) Bubble color Bubble

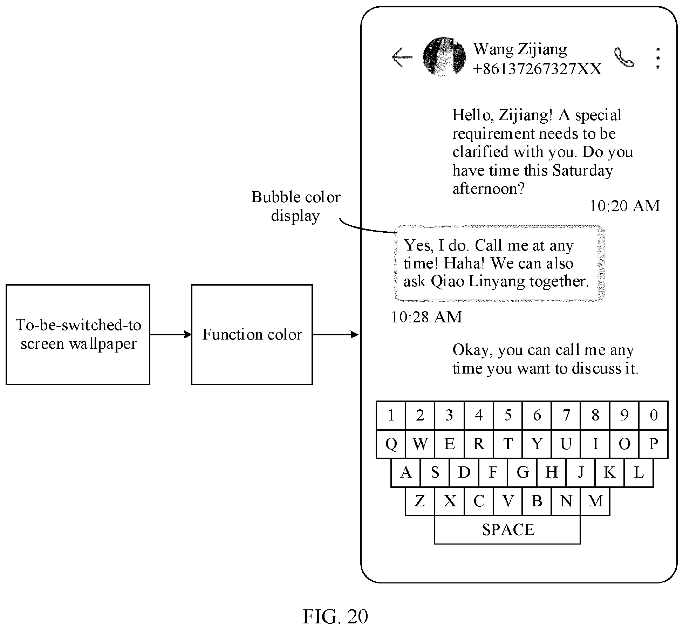

Usually, a bubble color may be a color used in a chat interface. For example, FIG. 20 is a schematic diagram of bubble color configuration according to an embodiment of this application. In a short message service application shown in FIG. 20, the bubble color may be used in a text box of an SMS message sent between a receiver and a sender.

In specific implementation, the corresponding bubble color may be determined based on cool and warm color system information of the picture.

S809: Perform color configuration on a corresponding control based on color information of the control in the theme color template.

In this embodiment of this application, after the color of the configurable control is configured based on the color information of the control in the theme color template, a theme style of each control and an overall theme style of the system can match the switched picture.

In specific implementation, the color types of the plurality of configurable controls in the terminal device may be first determined. The color type of the configurable control may be used to indicate a specific color of the control, for example, a primary color control, a highlight primary color control, a secondary color control, a title color control, a theme gray control, and/or a theme-tint color control. After the color type of each control is determined, color configuration may be separately performed on the plurality of configurable controls by using a color corresponding to the color type in the theme color template. For example, for the primary color control, color configuration may be performed on the primary color control by using a primary color determined in the theme color template. For the highlight primary color control, color configuration may be performed on the highlight primary color control by using a highlight primary color determined in the theme color template, and this type of control is rendered as the highlight primary color.

In a possible implementation of this embodiment of this application, the color types of the plurality of configurable controls in the terminal device may be determined by obtaining a control ID of a target control in the terminal device. The target control may be any one of the plurality of configurable controls in the terminal device.

In specific implementation, an application in the terminal device is used as an example. IDs of controls in the application may be written during design, and these control IDs may be used to indicate color types of corresponding controls. That is, by obtaining the control ID, it may be determined, in an index manner, whether the control belongs to a primary color control, a highlight primary color control, a secondary color control, a title color control, a theme gray control, or a theme-tint color control. When the color of the control needs to be changed based on the switched picture, a specific color used during color configuration may be determined from the theme color template based on the color type corresponding to the obtained control ID.

For example, if it is determined, based on the control ID, that a control on the application display page is a highlight primary color control, when performing color configuration on the control, the terminal device may render the control by using a color used by the highlight primary color control that has been determined in the theme color template.

In this embodiment of this application, for each application in the terminal device, if a control ID of a control on each page of the application has been written according to a corresponding design specification during design of the application, a corresponding color type may be directly determined based on the control ID, and color configuration may be performed by using a color corresponding to the color type in the theme color template. However, for some applications, a designer of the application may not write the control ID of each control into the program during design, or the designer does not write the control ID into the program strictly according to an operation specification. In this case, the color type of each control cannot be determined according to an index relationship between the control ID and the color type. Therefore, in another possible implementation of this embodiment of this application, when the color types of the plurality of configurable controls in the terminal device are determined, elements included in the configurable controls in the terminal device may be further identified, and the color type of the target control may be determined based on attribute information of the element included in the target control. The target control may be any one of the plurality of configurable controls, and the element of the control may include a text, a graphic, and/or an image. Based on an actual requirement, the graphic may further include a line, a rectangle, a circle, an arc, a point, or the like. This is not limited in this embodiment of this application.

In specific implementation, when the terminal device needs to change the color of the control according to the switched picture, the terminal device may identify an element included in each control, and then determine, based on attribute information of the element, which one of the following controls that the control belongs to: the primary color control, the highlight primary color control, the secondary color control, the title color control, the theme gray control, and the theme-tint color control. The attribute information may include information such as a size, a location, an area, and an initial color of the element. For example, when switching to a function interface, the terminal device determines, by identifying an element included in each control, that an area is an area for displaying a name of the function interface. In this case, the terminal device may identify the area as an area of the highlight primary color control, for example, the "Contacts" label area in FIG. 13. Then, the terminal device may perform color configuration on the control area by using the determined highlight primary color in the theme color template.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

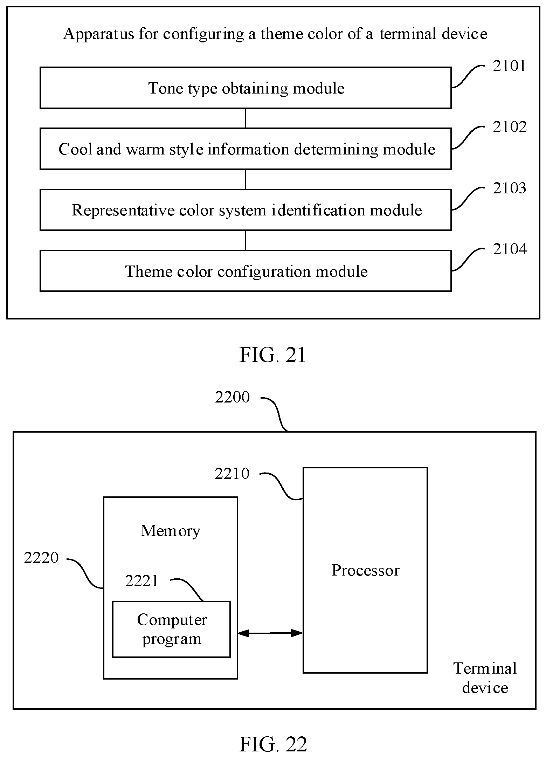

Corresponding to the method for configuring a theme color of a terminal device in the foregoing embodiment, FIG. 21 is a block diagram of a structure of an apparatus for configuring a theme color of a terminal device according to an embodiment of this application. For ease of description, only parts related to this embodiment of this application are shown.

Referring to FIG. 21, the apparatus may be applied to a terminal device, and may specifically include the following modules:

a tone type obtaining module 2101, configured to obtain a tone type of a to-be-switched-to picture when it is detected that the terminal device switches a screen picture;
a cool and warm color system information determining module 2102, configured to determine cool and warm color system information of the picture;

a representative color system identification module 2103, configured to identify arrangement and proportion information of a representative color system of the picture; and

a theme color configuration module 2104, configured to configure a theme color of the terminal device based on the tone type, the cool and warm color system information, and the arrangement and proportion information of the representative color system.

In this embodiment of this application, the tone type obtaining module 2101 may specifically include the following sub-modules:

a luminance component and purity component statistics collection sub-module, configured to collect statistics on a luminance component and a purity component, in predetermined color space, of a pixel included in the picture; and

a tone type determining sub-module, configured to determine the tone type of the picture based on the luminance component and the purity component.

In this embodiment of this application, the luminance component and purity component statistics collection sub-module may specifically include the following units:

a pixel value reading unit, configured to read a pixel value of each pixel in the picture;

a pixel value splitting unit, configured to split the pixel value of each pixel into a luminance component value and a purity component value in the predetermined color space;

a luminance component statistics collection unit, configured to collect statistics on a quantity of pixels corresponding to each luminance component value, to obtain the luminance component of the picture; and

a purity component statistics collection unit, configured to collect statistics on a quantity of pixels corresponding to each purity component value to obtain the purity component of the picture.

In this embodiment of this application, the tone type determining sub-module may specifically include the following units:

a luminance similarity calculation unit, configured to separately calculate a luminance similarity between the luminance component and a luminance component of a center of each of a plurality of preset tone groups, where the plurality of tone groups are obtained by clustering luminance components and purity components of a plurality of sample wallpapers;

a purity similarity calculation unit, configured to separately calculate a purity similarity between the purity component and a purity component of the center of each of the plurality of tone groups; and

a tone type determining unit, configured to determine the tone type of the picture based on the luminance similarity and the purity similarity, where the tone type includes a saturated type, a light type, or a dark type.

In this embodiment of this application, the cool and warm color system information determining module 2102 may specifically include the following sub-modules:

a hue component statistics collection sub-module, configured to collect statistics on a hue component of the picture in the predetermined color space;

a warm/cool value calculation sub-module, configured to calculate a warm/cool value of the picture based on the hue component and the purity component; and

a cool and warm color system information determining sub-module, configured to determine the cool and warm color system information of the picture based on the warm/cool value, where the cool and warm color system information includes a cool color system, a neutral color system, or a warm color system.

In this embodiment of this application, the representative color system identification module 2103 may specifically include the following sub-modules:

a pixel color identification sub-module, configured to identify a color of each pixel of the picture;

a pixel merging sub-module, configured to merge pixels with the same color;

a color clustering sub-module, configured to cluster pixels of all colors based on the hue component, to obtain a plurality of color clusters included in the picture;

an area and purity component value calculation sub-module, configured to separately calculate an area and a purity component value of a pixel included in each color in each color cluster; and

a representative color system determining sub-module, configured to determine the arrangement and proportion information of the representative color system of the picture based on the area and purity component value of the pixel included in each color.

In this embodiment of this application, the representative color system determining sub-module may specifically include the following units:

an area and purity component value weighting unit, configured to perform weighted summation on the area and the purity component value of the pixel included in each color in each color cluster based on preset weights, to obtain a weighted summation value of each color in each color cluster; and
a representative color system determining unit, configured to determine the arrangement and proportion information of the representative color system of the picture from each color cluster based on the weighted summation value.

In this embodiment of this application, the theme color configuration module 2104 may specifically include the following sub-modules:

a theme color template determining sub-module, configured to determine, based on the tone type, the cool and warm color system information, and the arrangement and proportion information of the representative color system, a theme color template corresponding to the picture, where the theme color template includes color information of a plurality of configurable controls of the terminal device; and
a theme color configuration sub-module, configured to perform color configuration on a corresponding control based on color information of the control in the theme color template.

In this embodiment of this application, the plurality of configurable controls may include a primary color control, and the theme color template determining sub-module may specifically include the following units:

a first primary color determining unit, configured to: if the representative color system includes a gray color system and an area of pixels included in the gray color system is greater than a first proportion of a second color system, configure a color corresponding to the gray color system as a color of the primary color control, where the second color system is a color system with a second largest area of pixels in all representative color systems; or
a second primary color determining unit, configured to: if the representative color system does not include a gray color system, or an area of pixels included in the gray color system is not the largest, or an area of pixels included in the gray color system is not greater than the first proportion of the second color system, configure a color corresponding to a color system with a largest area of pixels in color systems other than the gray color system as a color of the primary color control.

In this embodiment of this application, the plurality of configurable controls may further include a highlight primary color control, and the theme color template determining sub-module may further include the following unit:
a highlight primary color determining unit, configured to adjust the color of the primary color control based on the tone type of the picture, to obtain a color of the highlight primary color control, where colors of the highlight primary color control that correspond to different tone types separately meet preset luminance and purity requirements of the tone types.
In this embodiment of this application, the plurality of configurable controls may further include a secondary color control, and the theme color template determining sub-module may further include the following units:

a first secondary color determining unit, configured to: if the tone type of the picture is the light type or the dark type, collect statistics on whether an area of pixels included in another color system other than the color of the highlight primary color control is greater than a second proportion; and if the area of the pixels included in the another color system is greater than the second proportion, configure a color corresponding to a color system with a largest area in the another color system as a color of the secondary color control; or if no area of pixels included in another color system is greater than the second proportion, configure the color of the highlight primary color control as a color of the secondary color control; or
a second secondary color determining unit, configured to: if the tone type of the picture is the saturated type, configure a color of the secondary color control based on a quantity of representative color systems of the picture.

In this embodiment of this application, the plurality of configurable controls may further include a title color control, and the theme color template determining sub-module may further include the following unit:
a title color determining unit, configured to configure the color of the primary color control as a color of the title color control, and adjust the color of the title color control to meet preset luminance and purity requirements for the title color.
In this embodiment of this application, the plurality of configurable controls may further include a theme gray control, and the theme color template determining sub-module may further include the following unit:

a theme gray determining unit, configured to match a plurality of gray levels with different luminance and purity against the color of the primary color control, to obtain a color of the theme gray control.

In this embodiment of this application, the plurality of configurable controls may further include a theme-tint color control, a theme-tint color light control, a function color control, or a bubble color control, and the theme color template determining sub-module may further include the following unit:

a color determining unit, configured to determine, based on the cool and warm color system information of the picture, a color of the theme-tint color control, a color of the theme-tint color light control, a color of the function color control, or a color of the bubble color control that matches the cool and warm color system information.

In this embodiment of this application, the theme color configuration sub-module may specifically include the following units:

a control color type determining unit, configured to determine color types of the plurality of configurable controls in the terminal device; and

a control color configuration unit, configured to separately perform color configuration on the plurality of configurable controls by using colors corresponding to the color types in the theme color template.

In this embodiment of this application, the control color type determining unit may specifically include the following sub-unit:

a control ID obtaining sub-unit, configured to obtain a control ID of a target control in the terminal device, where the control ID is used to indicate a color type of the target control, the color type includes a primary color control, a highlight primary color control, a secondary color control, a title color control, a theme gray control, and/or a theme-tint color control, and the target control is any one of the plurality of configurable controls.

In this embodiment of this application, the control color type determining unit may further include the following sub-units:

a control element identification sub-unit, configured to identify an element included in the configurable controls in the terminal device, where the element includes a text, a graphic, and/or an image, the element has at least one type of attribute information, and the attribute information includes at least an area or an initial color of the element; and

a color type determining sub-unit, configured to determine a color type of a target control based on attribute information of an element included in the target control, where the target control is any one of the plurality of configurable controls.

The theme color of the terminal device is configured in the foregoing manner, so that a style of a theme of the system can keep consistent with a style of the picture or the environment, without affecting use of basic interaction functions of controls of various colors in the system.

The apparatus embodiment is basically similar to the method embodiment, and therefore is described briefly. For related parts, refer to descriptions in the method embodiment.

FIG. 22 is a schematic diagram of a terminal device according to an embodiment of this application. As shown in FIG. 22, the terminal device 2200 in this embodiment includes a processor 2210, a memory 2220, and a computer program 2221 that is stored in the memory 2220 and that can be run on the processor 2210. When executing the computer program 2221, the processor 2210 implements the steps in the embodiments of the method for configuring a theme color of a terminal device, for example, steps S401 to S404 shown in FIG. 4. Alternatively, when executing the computer program 2221, the processor 2210 implements functions of the modules/units in the foregoing apparatus embodiment, for example, functions of the modules 801 to 804 shown in FIG. 8.

For example, the computer program 2221 may be divided into one or more modules/units. The one or more modules/units are stored in the memory 2220, and are executed by the processor 2210, to complete this application. The one or more modules/units may be a series of computer program instruction segments that can implement a specific function, and the instruction segment may be used to describe an execution process of the computer program 2221 in the terminal device 2200. For example, the computer program 2221 may be divided into a tone type obtaining module, a cool and warm color system information determining module, a representative color system identification module, and a theme color configuration module. Specific functions of the modules are as follows:

The tone type obtaining module is configured to obtain a tone type of a to-be-switched-to picture when it is detected that the terminal device switches a screen picture.

The cool and warm color system information determining module is configured to calculate cool and warm color system information of the picture.

The representative color system identification module is configured to identify arrangement and proportion information of a representative color system of the picture.

The theme color configuration module is configured to configure a theme color of the terminal device based on the tone type, the cool and warm information, and the arrangement and proportion information of the representative color system.

The terminal device 2200 may be a computing device such as a desktop computer, a notebook computer, or a palmtop computer. The terminal device 2200 may include but is not limited to the processor 2210 and the memory 2220. A person skilled in the art may understand that FIG. 22 is merely an example of the terminal device 2200, and does not constitute a limitation on the terminal device 2200. The terminal device may include more or fewer components than those shown in the figure, or some components may be combined, or different components may be used. For example, the terminal device 2200 may further include an input/output device, a network access device, a bus, or the like.

The processor 2210 may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

The memory 2220 may be an internal storage unit of the terminal device 2200, for example, a hard disk drive or an internal storage of the terminal device 2200. The memory 2220 may alternatively be an external storage device of the terminal device 2200, for example, a removable hard disk, a smart media card (Smart Media Card, SMC), a secure digital (Secure Digital, SD) card, a flash card (Flash Card), or the like that is provided on the terminal device 2200. Further, the memory 2220 may include both the internal storage unit and the external storage device that are of the terminal device 2200. The memory 2220 is configured to store the computer program 2221 and other programs and data required by the terminal device 2200. The memory 2220 may be configured to temporarily store output data or to-be-output data.

An embodiment of this application further discloses a computer-readable storage medium, where the computer-readable storage medium stores a computer program. When the computer program is executed by a processor, the method for configuring a theme color of a terminal device in the foregoing method embodiments may be implemented.

An embodiment of this application further discloses a computer program product. When the computer program product runs on a terminal device, the terminal device may perform the method for configuring a theme color of a terminal device in the foregoing method embodiments.

In the foregoing embodiments, descriptions of embodiments have respective focuses. For a part that is not described in detail or recorded in an embodiment, refer to related descriptions in other embodiments.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the embodiments provided in this application, it should be understood that a method for configuring a theme color of a terminal device, an apparatus, and a terminal device that are disclosed may be implemented in other manners. For example, division into the modules or units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by the processor, steps of the foregoing method embodiments may be implemented. The computer program includes computer program code. The computer program code may be in a source code form, an object code form, an executable file form, some intermediate forms, or the like. The computer-readable medium may include at least any entity or apparatus that can carry computer program code to an apparatus for configuring a theme color of a terminal device and a terminal device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, the computer-readable medium cannot be the electrical carrier signal or the telecommunications signal according to legislation and patent practices.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements do not depart from the scope of the technical solutions in embodiments of this application, and shall fall within the scope of the invention, which is defined by the appended independent claims. The dependent claims define preferred embodiments.

**Claims**

1. A computer-implemented method for configuring a theme color of a terminal device, wherein the method comprises:

   obtaining (S401) a tone type of a to-be-switched-to picture when it is detected that a terminal device switches a screen picture, wherein the obtaining of the tone type of the to-be-switched-to picture comprises collecting statistics on a luminance component and a purity component, in predetermined color space, of a pixel comprised in the picture and determining the tone type of the picture based on the luminance component and the purity component;
   determining (S402) cool and warm color system information of the picture;
   identifying (S403) arrangement and proportion information of a representative color system of the picture; and
   configuring (S404) a theme color of the terminal device based on the tone type, the cool and warm color system information, and the arrangement and proportion information of the representative color system.

2. The method according to claim 1, wherein the collecting statistics on a luminance component and a purity component, in predetermined color space, of a pixel comprised in the picture comprises:

   reading a pixel value of each pixel in the picture;
   splitting the pixel value of each pixel into a luminance component value and a purity component value in the predetermined color space;
   collecting statistics on a quantity of pixels corresponding to each luminance component value to obtain the luminance component of the picture; and
   collecting statistics on a quantity of pixels corresponding to each purity component value to obtain the purity component of the picture.

3. The method according to claim 1, wherein the determining the tone type of the picture based on the luminance component and the purity component comprises:

   separately calculating a luminance similarity between the luminance component and a luminance component of a center of each of a plurality of preset tone groups, wherein the plurality of tone groups are obtained by clustering luminance components and purity components of a plurality of sample wallpapers;
   separately calculating a purity similarity between the purity component and a purity component of the center of each of the plurality of tone groups; and
   determining the tone type of the picture based on the luminance similarity and the purity similarity, wherein the tone type comprises a saturated type, a light type, or a dark type.

4. The method according to any one of claims 1 to 3, wherein the determining cool and warm color system information of the picture comprises:

   collecting statistics on a hue component of the picture in the predetermined color space;
   calculating a warm/cool value of the picture based on the hue component and the purity component; and
   determining the cool and warm color system information of the picture based on the warm/cool value, wherein the cool and warm color system information comprises a cool color system, a neutral color system, or a warm color system.

5. The method according to claim 4, wherein the identifying arrangement and proportion information of a representative color system of the picture comprises:

identifying a color of each pixel of the picture, and merging pixels with a same color;
clustering pixels of all colors based on the hue component, to obtain a plurality of color clusters comprised in the picture;
separately calculating an area and a purity component value of a pixel comprised in each color in each color cluster; and
determining the arrangement and proportion information of the representative color system of the picture based on the area and purity component value of the pixel comprised in each color.

6. The method according to claim 5, wherein the determining the arrangement and proportion information of the representative color system of the picture based on the area and purity component value of the pixel comprised in each color comprises:

performing weighted summation on the area and the purity component value of the pixel comprised in each color in each color cluster based on preset weights, to obtain a weighted summation value of each color in each color cluster; and
determining the arrangement and proportion information of the representative color system of the picture from each color cluster based on the weighted summation value.

7. The method according to any one of claims 1 to 3 or claims 5 and 6, wherein the configuring a theme color of the terminal device based on the tone type, the cool and warm color system information, and the arrangement and proportion information of the representative color system comprises:

determining, based on the tone type, the cool and warm color system information, and the arrangement and proportion information of the representative color system, a theme color template corresponding to the picture, wherein the theme color template comprises color information of a plurality of configurable controls of the terminal device; and
performing color configuration on a corresponding control based on color information of the control in the theme color template.

8. The method according to claim 7, wherein the plurality of configurable controls comprise a primary color control, and the determining, based on the tone type, the cool and warm color system information, and the arrangement and proportion information of the representative color system, a theme color template corresponding to the picture comprises:

if the representative color system comprises a gray color system, and an area of pixels comprised in the gray color system is greater than a first proportion of a second color system, configuring a color corresponding to the gray color system as a color of the primary color control, wherein the second color system is a color system with a second largest area of pixels in all representative color systems; or
if the representative color system does not comprise a gray color system, or an area of pixels comprised in the gray color system is not the largest, or an area of pixels comprised in the gray color system is not greater than the first proportion of the second color system, configuring a color corresponding to a color system with a largest area of pixels in color systems other than the gray color system as a color of the primary color control.

9. The method according to claim 8, wherein the plurality of configurable controls comprise a highlight primary color control, and the determining, based on the tone type, the cool and warm color system information, and the arrangement and proportion information of the representative color system, a theme color template corresponding to the picture comprises:
adjusting the color of the primary color control based on the tone type of the picture, to obtain a color of the highlight primary color control, wherein colors of the highlight primary color control that correspond to different tone types separately meet preset luminance and purity requirements of the tone types.

10. The method according to claim 7, wherein the performing color configuration on a corresponding control based on color information of the control in the theme color template comprises:

determining color types of the plurality of configurable controls in the terminal device; and

separately performing color configuration on the plurality of configurable controls by using colors corresponding to the color types in the theme color template.

11. The method according to claim 10, wherein the determining color types of the plurality of configurable controls in the terminal device comprises:
obtaining a control ID of a target control in the terminal device, wherein the control ID is used to indicate a color type of the target control, the color type comprises a primary color control, a highlight primary color control, a secondary color control, a title color control, a theme gray control, and/or a theme-tint color control, and the target control is any one of the plurality of configurable controls.

12. The method according to claim 10, wherein the determining color types of the plurality of configurable controls in the terminal device comprises:

identifying an element comprised in the configurable controls in the terminal device, wherein the element comprises a text, a graphic, and/or an image, the element has at least one type of attribute information, and the attribute information comprises at least an area or an initial color of the element; and
determining a color type of a target control based on attribute information of an element comprised in the target control, wherein the target control is any one of the plurality of configurable controls.

13. A terminal device, comprising a memory (220), a processor (280), and a computer program that is stored in the memory and can be run on the processor (280), wherein when executing the computer program, the processor (280) implements the method for configuring a theme color of a terminal device according to any one of claims 1 to 12.

14. A computer-readable storage medium, wherein the computer-readable storage medium stores a computer program, and when the computer program is executed by a processor, the method for configuring a theme color of a terminal device according to any one of claims 1 to 12 is implemented.

**Patentansprüche**

1. Computerimplementiertes Verfahren zum Konfigurieren einer Themenfarbe eines Endgeräts, wobei das Verfahren Folgendes umfasst:

Erhalten (S401) eines Tontyps eines Bilds, zu dem zu wechseln ist, wenn detektiert wird, dass ein Endgerät ein Bildschirmbild wechselt, wobei das Erhalten des Tontyps des Bilds, zu dem zu wechseln ist, das Sammeln statistischer Daten zu einer Leuchtdichtekomponente und einer Reinheitskomponente, in einem vorher bestimmten Farbraum, eines in dem Bild umfassten Pixels und das Bestimmen des Tontyps des Bilds basierend auf der Leuchtdichtekomponente und der Reinheitskomponente umfasst;
Bestimmen (S402) von Kalt- und Warm-Farbsystem-Informationen des Bilds;
Identifizieren (S403) von Anordnungs- und Anteilinformationen eines repräsentativen Farbsystems des Bilds; und
Konfigurieren (S404) einer Themenfarbe des Endgeräts basierend auf dem Tontyp, den Kalt- und Warm-Farbsystem-Informationen und den Anordnungs- und Anteilinformationen des repräsentativen Farbsystems.

2. Verfahren nach Anspruch 1, wobei das Sammeln statistischer Daten zu einer Leuchtdichtekomponente und einer Reinheitskomponente, in einem vorher bestimmten Farbraum, eines in dem Bild umfassten Pixels Folgendes umfasst:

Lesen eines Pixelwerts jedes Pixels in dem Bild;
Aufteilen des Pixelwerts jedes Pixels in einen Leuchtdichtekomponentenwert und einen Reinheitskomponentenwert in dem vorher bestimmten Farbraum;
Sammeln statistischer Daten zu einer Menge von Pixeln, die mit jedem Leuchtdichtekomponentenwert korrespondiert, um die Leuchtdichtekomponente des Bilds zu erhalten; und
Sammeln statistischer Daten zu einer Menge von Pixeln, die mit jedem Reinheitskomponentenwert korrespondiert, um die Reinheitskomponente des Bilds zu erhalten.

3. Verfahren nach Anspruch 1, wobei das Bestimmen des Tontyps des Bilds basierend auf der Leuchtdichtekomponente und der Reinheitskomponente Folgendes umfasst:

separates Berechnen einer Leuchtdichte-Ähnlichkeit zwischen der Leuchtdichtekomponente und einer Leuchtdichtekomponente einer Mitte jeder einer Vielzahl voreingestellter Tongruppen, wobei die Vielzahl von Tongruppen durch das Clustern von Leuchtdichtekomponenten und Reinheitskomponenten einer Vielzahl von Musterhintergrundbildern erhalten wird;

separates Berechnen einer Reinheitsähnlichkeit zwischen der Reinheitskomponente und einer Reinheitskomponente der Mitte jeder der Vielzahl von Tongruppen; und

Bestimmen des Tontyps des Bilds basierend auf der Leuchtdichte-Ähnlichkeit und der Reinheitsähnlichkeit, wobei der Tontyp einen gesättigten Typ, einen hellen Typ oder einen dunklen Typ umfasst.

4. Verfahren nach einem der Ansprüche 1 bis 3, wobei das Bestimmen von Kalt- und Warm-Farbsystem-Informationen des Bilds Folgendes umfasst:

Sammeln statistischer Daten zu einer Nuancenkomponente des Bilds in dem vorher bestimmten Farbraum;

Berechnen eines Warm-/Kalt-Werts des Bilds basierend auf der Nuancenkomponente und der Reinheitskomponente; und

Bestimmen der Kalt- und Warm-Farbsystem-Informationen des Bilds basierend auf dem Warm-/Kalt-Wert, wobei die Kalt- und Warm-Farbsystem-Informationen ein kaltes Farbsystem, ein achromatisches Farbsystem oder ein warmes Farbsystem umfassen.

5. Verfahren nach Anspruch 4, wobei das Identifizieren von Anordnungs- und Anteilinformationen eines repräsentativen Farbsystems des Bilds Folgendes umfasst:

Identifizieren einer Farbe jedes Pixels des Bilds und Zusammenführen von Pixeln mit einer selben Farbe;

Clustern von Pixeln aller Farben basierend auf der Nuancenkomponente, um eine Vielzahl von in dem Bild umfassten Farbclustern zu erhalten;

separates Berechnen einer Fläche und eines Reinheitskomponentenwerts eines in jeder Farbe in jedem Farbcluster umfassten Pixels; und

Bestimmen der Anordnungs- und Anteilinformationen des repräsentativen Farbsystems des Bilds basierend auf der Fläche und dem Reinheitskomponentenwert des in jeder Farbe umfassten Pixels.

6. Verfahren nach Anspruch 5, wobei das Bestimmen der Anordnungs- und Anteilinformationen des repräsentativen Farbsystems des Bilds basierend auf der Fläche und dem Reinheitskomponentenwert des in jeder Farbe umfassten Pixels Folgendes umfasst:

Durchführen einer gewichteten Summierung an der Fläche und dem Reinheitskomponentenwert des in jeder Farbe in jedem Farbcluster umfassten Pixels basierend auf voreingestellten Gewichten, um einen gewichteten Summierungswert jeder Farbe in jedem Farbcluster zu erhalten; und

Bestimmen der Anordnungs- und Anteilinformationen des repräsentativen Farbsystems des Bilds aus jedem Farbcluster basierend auf dem gewichteten Summierungswert.

7. Verfahren nach einem der Ansprüche 1 bis 3 oder der Ansprüche 5 und 6, wobei das Konfigurieren einer Themenfarbe des Endgeräts basierend auf dem Tontyp, den Kalt- und Warm-Farbsystem-Informationen und den Anordnungs- und Anteilinformationen des repräsentativen Farbsystems Folgendes umfasst:

Bestimmen, basierend auf dem Tontyp, den Kalt- und Warm-Farbsystem-Informationen und den Anordnungs- und Anteilinformationen des repräsentativen Farbsystems, einer mit dem Bild korrespondierenden Themenfarbenvorlage, wobei die Themenfarbenvorlage Farbinformationen einer Vielzahl konfigurierbarer Steuerelemente des Endgeräts umfasst; und

Durchführen einer Farbkonfiguration an einem korrespondierenden Steuerelement basierend auf Farbinformationen des Steuerelements in der Themenfarbenvorlage.

8. Verfahren nach Anspruch 7, wobei die Vielzahl konfigurierbarer Steuerelemente ein Primärfarbe-Steuerelement umfasst und das Bestimmen, basierend auf dem Tontyp, den Kalt- und Warm-Farbsystem-Informationen und den Anordnungs- und Anteilinformationen des repräsentativen Farbsystems, einer mit dem Bild korrespondierenden Themenfarbenvorlage Folgendes umfasst:

wenn das repräsentative Farbsystem ein graues Farbsystem umfasst und eine Fläche von in dem grauen Farbsystem umfassten Pixeln größer als ein erster Anteil eines zweiten Farbsystems ist, Konfigurieren einer

# EP 4 099 162 B1

Farbe, die mit dem grauen Farbsystem korrespondiert, als eine Farbe des Primärfarbe-Steuerelements, wobei das zweite Farbsystem ein Farbsystem mit einer zweitgrößten Fläche von Pixeln in allen repräsentativen Farbsystemen ist; oder,

wenn das repräsentative Farbsystem kein graues Farbsystem umfasst oder eine Fläche von in dem grauen Farbsystem umfassten Pixeln nicht die größte ist oder eine Fläche von in dem grauen Farbsystem umfassten Pixeln nicht größer als der erste Anteil des zweiten Farbsystems ist, Konfigurieren einer Farbe, die mit einem Farbsystem mit einer größten Fläche von Pixeln in anderen Farbsystemen als dem grauen Farbsystem korrespondiert, als eine Farbe des Primärfarbe-Steuerelements.

9. Verfahren nach Anspruch 8, wobei die Vielzahl konfigurierbarer Steuerelemente ein Hervorhebungsprimärfarbe-Steuerelement umfasst und das Bestimmen, basierend auf dem Tontyp, den Kalt- und Warm-Farbsystem-Informationen und den Anordnungs- und Anteilinformationen des repräsentativen Farbsystems, einer mit dem Bild korrespondierenden Themenfarbenvorlage Folgendes umfasst:
Anpassen der Farbe des Primärfarbe-Steuerelements basierend auf dem Tontyp des Bilds, um eine Farbe des Hervorhebungsprimärfarbe-Steuerelements zu erhalten, wobei Farben des Hervorhebungsprimärfarbe-Steuerelements, die mit unterschiedlichen Tontypen korrespondieren, voreingestellte Leuchtdichte- und Reinheitsanforderungen der Tontypen separat erfüllen.

10. Verfahren nach Anspruch 7, wobei das Durchführen einer Farbkonfiguration an einem korrespondierenden Steuerelement basierend auf Farbinformationen des Steuerelements in der Themenfarbenvorlage Folgendes umfasst:

Bestimmen von Farbtypen der Vielzahl konfigurierbarer Steuerelemente in dem Endgerät; und
separates Durchführen einer Farbkonfiguration an der Vielzahl konfigurierbarer Steuerelemente unter Verwendung von mit den Farbtypen in der Themenfarbenvorlage korrespondierenden Farben.

11. Verfahren nach Anspruch 10, wobei das Bestimmen von Farbtypen der Vielzahl konfigurierbarer Steuerelemente in dem Endgerät Folgendes umfasst:
Erhalten einer Steuerelement-ID eines Ziel-Steuerelements in dem Endgerät, wobei die Steuerelement-ID verwendet wird, um einen Farbtyp des Ziel-Steuerelements anzugeben, der Farbtyp ein Primärfarbe-Steuerelement, ein Hervorhebungsprimärfarbe-Steuerelement, ein Sekundärfarbe-Steuerelement, ein Titelfarbe-Steuerelement, ein Thema-grau-Steuerelement und/oder ein Thema-Tönungsfarbe-Steuerelement umfasst und das Ziel-Steuerelement ein beliebiges der Vielzahl konfigurierbarer Steuerelemente ist.

12. Verfahren nach Anspruch 10, wobei das Bestimmen von Farbtypen der Vielzahl konfigurierbarer Steuerelemente in dem Endgerät Folgendes umfasst:

Identifizieren eines in den konfigurierbaren Steuerelementen in dem Endgerät umfassten Elements, wobei das Element einen Text, eine Grafik und/oder ein Bild umfasst, das Element mindestens einen Typ von Attributinformationen aufweist und die Attributinformationen mindestens eine Fläche oder eine anfängliche Farbe des Elements umfassen; und
Bestimmen eines Farbtyps eines Ziel-Steuerelements basierend auf Attributinformationen eines in dem Ziel-Steuerelement umfassten Elements, wobei das Ziel-Steuerelement ein beliebiges der Vielzahl konfigurierbarer Steuerelemente ist.

13. Endgerät, das einen Speicher (220), einen Prozessor (280) und ein Computerprogramm, das in dem Speicher gespeichert ist und auf dem Prozessor (280) lauffähig ist, umfasst, wobei der Prozessor (280) beim Ausführen des Computerprogramms das Verfahren zum Konfigurieren einer Themenfarbe eines Endgeräts nach einem der Ansprüche 1 bis 12 implementiert.

14. Computerlesbares Speichermedium, wobei das computerlesbare Speichermedium ein Computerprogramm speichert und, wenn das Computerprogramm von einem Prozessor ausgeführt wird, das Verfahren zum Konfigurieren einer Themenfarbe eines Endgeräts nach einem der Ansprüche 1 bis 12 implementiert wird.

**Revendications**

1. Procédé mis en œuvre par ordinateur pour configurer une couleur de thème d'un dispositif terminal, dans lequel le procédé comprend :

26

l'obtention (S401) d'un type de ton d'une image à afficher lorsqu'il est détecté qu'un dispositif terminal change une image à l'écran, dans lequel l'obtention du type de ton de l'image à afficher comprend la collecte de statistiques sur une composante de luminance et une composante de pureté, dans un espace de couleur prédéterminé, d'un pixel compris dans l'image et la détermination du type de ton de l'image sur la base de la composante de luminance et de la composante de pureté ;

la détermination (S402) d'informations de système de couleurs froides et chaudes de l'image ;

l'identification (S403) d'informations d'agencement et de proportion d'un système de couleurs représentatif de l'image ; et

la configuration (S404) d'une couleur de thème du dispositif terminal sur la base du type de ton, des informations de système de couleurs froides et chaudes, et des informations d'agencement et de proportion du système de couleurs représentatif.

2. Procédé selon la revendication 1, dans lequel la collecte de statistiques sur une composante de luminance et une composante de pureté, dans un espace de couleur prédéterminé, d'un pixel compris dans l'image comprend :

la lecture d'une valeur de pixel de chaque pixel dans l'image ;

la division de la valeur de pixel de chaque pixel en une valeur de composante de luminance et une valeur de composante de pureté dans l'espace de couleur prédéterminé ;

la collecte de statistiques sur une quantité de pixels correspondant à chaque valeur de composante de luminance pour obtenir la composante de luminance de l'image ; et

la collecte de statistiques sur une quantité de pixels correspondant à chaque valeur de composante de pureté pour obtenir la composante de pureté de l'image.

3. Procédé selon la revendication 1, dans lequel la détermination du type de ton de l'image sur la base de la composante de luminance et de la composante de pureté comprend :

le calcul séparé d'une similarité de luminance entre la composante de luminance et une composante de luminance d'un centre de chacun d'une pluralité de groupes de tons prédéfinis, dans lequel la pluralité de groupes de tons sont obtenus en regroupant des composantes de luminance et des composantes de pureté d'une pluralité d'échantillons de papiers peints ;

le calcul séparé d'une similarité de pureté entre la composante de pureté et une composante de pureté du centre de chacun de la pluralité de groupes de tons ; et

la détermination du type de ton de l'image sur la base de la similarité de luminance et de la similarité de pureté, dans lequel le type de ton comprend un type saturé, un type clair ou un type foncé.

4. Procédé selon l'une quelconque des revendications 1 à 3, dans lequel la détermination d'informations de système de couleurs froides et chaudes de l'image comprend :

la collecte de statistiques sur une composante de teinte de l'image dans l'espace de couleur prédéterminé ;

le calcul d'une valeur chaude/froide de l'image sur la base de la composante de teinte et de la composante de pureté ; et

la détermination des informations de système de couleurs froides et chaudes de l'image sur la base de la valeur chaude/froide, dans lequel les informations de système de couleurs froides et chaudes comprennent un système de couleurs froides, un système de couleurs neutres ou un système de couleurs chaudes.

5. Procédé selon la revendication 4, dans lequel l'identification d'informations d'agencement et de proportion d'un système de couleurs représentatif de l'image comprend :

l'identification d'une couleur de chaque pixel de l'image, et la fusion de pixels d'une même couleur ;

le regroupement de pixels de toutes les couleurs sur la base de la composante de teinte, pour obtenir une pluralité de groupes de couleurs compris dans l'image ;

le calcul séparé d'une zone et d'une valeur de composante de pureté d'un pixel compris dans chaque couleur dans chaque groupe de couleurs ; et

la détermination des informations d'agencement et de proportion du système de couleurs représentatif de l'image sur la base de la zone et de la valeur de composante de pureté du pixel compris dans chaque couleur.

6. Procédé selon la revendication 5, dans lequel la détermination des informations d'agencement et de proportion du système de couleurs représentatif de l'image sur la base de la zone et de la valeur de composante de pureté du pixel compris dans chaque couleur comprend :

la réalisation d'une sommation pondérée sur la zone et la valeur de composante de pureté du pixel compris dans chaque couleur dans chaque groupe de couleurs sur la base de pondérations prédéfinies, pour obtenir une valeur de sommation pondérée de chaque couleur dans chaque groupe de couleurs ; et

la détermination des informations d'agencement et de proportion du système de couleurs représentatif de l'image à partir de chaque groupe de couleurs sur la base de la valeur de sommation pondérée.

7. Procédé selon l'une quelconque des revendications 1 à 3 ou les revendications 5 et 6, dans lequel la configuration d'une couleur de thème du dispositif terminal sur la base du type de ton, des informations de système de couleurs froides et chaudes, et des informations d'agencement et de proportion du système de couleurs représentatif comprend :

la détermination, sur la base du type de ton, des informations de système de couleurs froides et chaudes, et des informations d'agencement et de proportion du système de couleurs représentatif, d'un modèle de couleur de thème correspondant à l'image, dans lequel le modèle de couleur de thème comprend des informations de couleur d'une pluralité de commandes configurables du dispositif terminal ; et

la réalisation d'une configuration de couleur sur une commande correspondante sur la base d'informations de couleur de la commande dans le modèle de couleur de thème.

8. Procédé selon la revendication 7, dans lequel la pluralité de commandes configurables comprennent une commande de couleur primaire, et la détermination, sur la base du type de ton, des informations de système de couleurs froides et chaudes, et des informations d'agencement et de proportion du système de couleurs représentatif, d'un modèle de couleur de thème correspondant à l'image comprend :

si le système de couleurs représentatif comprend un système de couleurs grises, et qu'une zone de pixels comprise dans le système de couleurs grises est supérieure à une première proportion d'un second système de couleurs, la configuration d'une couleur correspondant au système de couleurs grises en tant que couleur de la commande de couleur primaire, dans lequel le second système de couleurs est un système de couleurs avec une seconde plus grande zone de pixels dans tous les systèmes de couleurs représentatifs ; ou

si le système de couleurs représentatif ne comprend pas un système de couleurs grises, ou qu'une zone de pixels comprise dans le système de couleurs grises n'est pas la plus grande, ou qu'une zone de pixels comprise dans le système de couleurs grises n'est pas supérieure à la première proportion du second système de couleurs, la configuration d'une couleur correspondant à un système de couleurs avec une plus grande zone de pixels dans des systèmes de couleurs autres que le système de couleurs grises en tant que couleur de la commande de couleur primaire.

9. Procédé selon la revendication 8, dans lequel la pluralité de commandes configurables comprennent une commande de couleur primaire de mise en surbrillance, et la détermination, sur la base du type de ton, des informations de système de couleurs froides et chaudes, et des informations d'agencement et de proportion du système de couleurs représentatif, d'un modèle de couleur de thème correspondant à l'image comprend :

l'ajustement de la couleur de la commande de couleur primaire sur la base du type de ton de l'image, pour obtenir une couleur de la commande de couleur primaire de mise en surbrillance, dans lequel des couleurs de la commande de couleur primaire de mise en surbrillance qui correspondent à différents types de tons répondent séparément à des exigences de luminance et de pureté prédéfinies des types de tons.

10. Procédé selon la revendication 7, dans lequel la réalisation d'une configuration de couleur sur une commande correspondante sur la base d'informations de couleur de la commande dans le modèle de couleur de thème comprend :

la détermination de types de couleurs de la pluralité de commandes configurables dans le dispositif terminal ; et

la réalisation séparée d'une configuration de couleur sur la pluralité de commandes configurables à l'aide de couleurs correspondant aux types de couleurs dans le modèle de couleur de thème.

11. Procédé selon la revendication 10, dans lequel la détermination de types de couleurs de la pluralité de commandes configurables dans le dispositif terminal comprend :

l'obtention d'un ID de commande d'une commande cible dans le dispositif terminal, dans lequel l'ID de commande est utilisé pour indiquer un type de couleur de la commande cible, le type de couleur comprend une commande de couleur primaire, une commande de couleur primaire de mise en surbrillance, une commande de couleur secondaire, une commande de couleur de titre, une commande de grisage de thème, et/ou une commande de couleur de teinte de thème, et la commande cible est l'une quelconque de la pluralité de commandes configurables.

12. Procédé selon la revendication 10, dans lequel la détermination de types de couleurs de la pluralité de commandes configurables dans le dispositif terminal comprend :

l'identification d'un élément compris dans les commandes configurables dans le dispositif terminal, dans lequel l'élément comprend un texte, un graphique et/ou une image, l'élément a au moins un type d'informations d'attribut, et les informations d'attribut comprennent au moins une zone ou une couleur initiale de l'élément ; et la détermination d'un type de couleur d'une commande cible sur la base d'informations d'attribut d'un élément compris dans la commande cible, dans lequel la commande cible est l'une quelconque de la pluralité de commandes configurables.

13. Dispositif terminal, comprenant une mémoire (220), un processeur (280), et un programme informatique qui est stocké dans la mémoire et peut être exécuté sur le processeur (280), dans lequel, lors de l'exécution du programme informatique, le processeur (280) met en œuvre le procédé pour configurer une couleur de thème d'un dispositif terminal selon l'une quelconque des revendications 1 à 12.

14. Support de stockage lisible par ordinateur, dans lequel le support de stockage lisible par ordinateur stocke un programme informatique, et lorsque le programme informatique est exécuté par un processeur, le procédé pour configurer une couleur de thème d'un dispositif terminal selon l'une quelconque des revendications 1 à 12 est mis en œuvre.

FIG. 1

FIG. 2

| Application layer | Messages | Calendar | Camera | Videos |
| | Navigation | Gallery | Phone | ... |

| Application framework layer | Window manager | Resource manager | Notification manager | ... |

| System layer | Sensor service module | Physical status identification module | Three-dimensional graphics processing library | ... |

| Hardware abstraction layer | Display driver | Camera driver | Sensor driver | ... |

FIG. 3

Obtain a tone type of a to-be-switched-to picture when it is detected that a terminal device switches a screen picture — S401

Determine cool and warm color system information of the picture — S402

Identify arrangement and proportion information of a representative color system of the picture — S403

Configure a theme color of the terminal device based on the tone type, the cool and warm color system information, and the arrangement and proportion information of the representative color system — S404

FIG. 4

Cool color system

Blue background

Moon

Forest

FIG. 5(a)

Neutral color system

Gray beach background

Plant

Beach

FIG. 5(b)

Warm color system

Pale red area

Yellow column

Yellow area

FIG. 5(c)

| Scale a picture |
|---|
| Cluster each color system in a k-means clustering manner |
| Select a color system corresponding to a center of each cluster as a representative color system of the picture |

FIG. 6(a)

| Scale a picture |
| --- |

↓

| Classify each color system |
| --- |

↓

| Perform preliminary color system merging |
| --- |

↓

| Complete secondary merging with reference to human factor perception |
| --- |

↓

| Use an average color obtained after merging as a representative color system of the picture |
| --- |

FIG. 6(b)

| Scale a picture |
| --- |

↓

| Merge same colors through statistics |
| --- |

↓

| Complete color system classification in a hierarchical clustering manner |
| --- |

↓

| Complete internal color system clustering in a hierarchical clustering manner |
| --- |

↓

| Use a color with a largest weight in each cluster as a representative color system of a screen wallpaper |
| --- |

FIG. 6(c)

Scheme 1

| Color 3 | Color 4 | Color 6 | Color 8 | Color 5 |
|---------|---------|---------|---------|---------|

To-be-switched-to screen wallpaper

Scheme 2

| Color 1 | Color 2 | Color 3 | Color 5 | Color 7 |
|---------|---------|---------|---------|---------|

Scheme 3

| Color 1 | Color 2 | Color 3 | Color 4 | Color 5 |
|---------|---------|---------|---------|---------|

FIG. 7

Collect statistics on a luminance component and a purity component, in predetermined color space, of a pixel included in a picture when it is detected that a terminal device switches a screen picture

S801

Determine a tone type of the picture based on the luminance component and the purity component

S802

Collect statistics on a hue component of the picture in the predetermined color space, and calculate a warm/cold value of the picture based on the hue component and the purity component

S803

Determine cold and warm color system information of the picture based on the warm/cold value

S804

Identify a color of each pixel of the picture, and merge pixels with a same color

S805

Cluster pixels of all colors based on the hue component, to obtain a plurality of color clusters included in the picture

S806

Separately calculate an area and a purity component value of a pixel included in each color in each color cluster, and determine arrangement and proportion information of a representative color system of the picture based on the area and the purity component value of the pixel included in each color

S807

Determine, based on the tone type, the cold and warm color system information, and the arrangement and proportion information of the representative color system, a theme color template corresponding to the picture, where the theme color template includes color information of a plurality of configurable controls of the terminal device

S808

Perform color configuration on a corresponding control based on color information of the control in the theme color template

S809

FIG. 8

FIG. 9

FIG. 10

FIG. 11

Phone

Jollin Yang          0'32"

Kevin He          2'07"

Primary color
filling area

To-be-switched-to
screen wallpaper

Primary color

## FIG. 12

Contacts

Contact 1

Contact 2

Contact 3

Contact 4

To-be-switched-to
screen wallpaper

Highlight
primary color

Highlight primary
color display

Phone    Contacts  Favorites

## FIG. 13

Contacts

Contact 1
Contact 2
Contact 3
Contact 4

To-be-switched-to screen wallpaper → Secondary color →

Secondary color filling area

Phone  Contacts  Favorites

FIG. 14

Contacts

Title color display

Contact 1
Contact 2
Contact 3
Contact 4

To-be-switched-to screen wallpaper → Title color →

Phone  Contacts  Favorites

FIG. 15

| 1 | 2 | 3 | 4 | 5 | 6 | 7 | 8 | 9 | 0 |

Theme gray 1

| Q | W | E | R | T | Y | U | I | O | P |

Theme gray 2

| A | S | D | F | G | H | J | K | L |

Theme gray 3

| Z | X | C | V | B | N | M |

Theme gray 4

SPACE

Contacts

Contact 1

Contact 2

Contact 3

Contact 4

Phone  Contacts  Favorites

FIG. 16

Settings

Search

Theme-tint color display

Do Not Disturb

Enable Account Protection

Home Screen & Wallpaper

Display

To-be-switched-to screen wallpaper

Theme-tint color

FIG. 17

All Notes

Search

Theme-tint
color light
display

Note 1

Note 2

Note 3

Notes          To-dos

To-be-switched-
to screen
wallpaper

Theme-tint
color light

FIG. 18

Phone
2 missed calls

Jollin Yang          0'32"

Kevin He          2'07"

x Glen Gao          11/11

Rabbit Zhou          1'52"

x Glen Gao          11/11

Function
color
display

Phone    Contacts    Favorites

To-be-switched-
to screen
wallpaper

Function
color

FIG. 19

Bubble color
display

Wang Zijiang
+86137267327XX

Hello, Zijiang! A special
requirement needs to be
clarified with you. Do you
have time this Saturday
afternoon?

10:20 AM

Yes, I do. Call me at any
time! Haha! We can also
ask Qiao Linyang together.

10:28 AM

Okay, you can call me any
time you want to discuss it.

| 1 | 2 | 3 | 4 | 5 | 6 | 7 | 8 | 9 | 0 |
| Q | W | E | R | T | Y | U | I | O | P |
| A | S | D | F | G | H | J | K | L |
| Z | X | C | V | B | N | M |
| SPACE |

To-be-switched-to
screen wallpaper

Function color

FIG. 20

Apparatus for configuring a theme color of a terminal device

Tone type obtaining module — 2101

Cool and warm style information determining module — 2102

Representative color system identification module — 2103

Theme color configuration module — 2104

FIG. 21

2200

2210

Memory

2220

2221

Computer program

Processor

Terminal device

FIG. 22

**REFERENCES CITED IN THE DESCRIPTION**

**Patent documents cited in the description**

- CN 202010125350
- JP 2005277460 A
- US 6292228 B1